# EUROPEAN PATENT APPLICATION

(11) **EP 4 822 063 A1**
(43) Date of publication of application: **14.10.2026**
(21) Application number: 26171668.2
(22) Date of filing: 10.04.2026
(51) Int. Cl.: C25C 1/12, C22B 3/26, C22B 15/00, C25C 7/06, C25D 1/04, C25D 21/18

(54) **HYBRID PLANT**

(30) Priority: 11.04.2025 CL 202501107; 01.04.2026 CL 202601027
(71) Applicant: Sociedad Punta del Cobre S.A., Santiago (CL)
(72) Inventor: RÍOS RIVAS, Sebastián, Las Condes, Santiago (CL); SAAVEDRA LYNG, Juan Pablo, Colina, Santiago (CL); ARRIAGADA HOUSE, Francisco Javier, Las Condes, Santiago (CL); BUSTOS MUÑOZ, Sergio José, Ñuñoa, Santiago (CL)
(74) Representative: Herrero & Asociados, S.L.

(57) **Abstract**

A hybrid plant for the simultaneous production of copper cathodes and copper foil in parallel; a hybrid method for the simultaneous production of copper cathodes and copper foil; a bridging plant that enables the connection of a copper cathode production process and a copper foil production process; and a process for the production of a concentrated copper solution to feed a copper foil plant. The invention enables the production of copper cathodes and copper foil in parallel by transferring a fraction of a copper loaded solution from a solvent extraction-electrowinning plant to produce a copper sulphate solution in a bridging plant, which is treated to generate a concentrated copper solution that feeds a copper foil plant. The electrolyte solution circuits are connected between both plants in order to optimize overall copper recovery, facilitate the management of impurities and optimize the use of reagents.

## Description

### TECHNICAL FIELD

The invention relates to the field of copper refining plants and the production of copper products. Specifically, it relates to a hybrid plant for the production of copper cathodes and copper foil, and to a method for producing copper cathodes and copper foil in parallel.

### DESCRIPTION OF THE PRIOR ART

Copper cathode production plants and copper foil plants are known in the prior art. However, since copper cathodes and copper foil are different products, and given current technology, these plants operate independently and employ processes unrelated to one another.

Various processes are carried out in a copper cathode production plant. Typically, the process for obtaining copper cathodes comprises, sequentially, a mineral leaching stage, a *solvent* extraction (SX) stage, and an electrowinning (EW) stage.

Leaching consists of the sorting of one or more substances, such as metals, contained or present in a solid matrix, such as mineralized rock, through the use or application of liquid solvents; specifically, the copper ore is treated with acidic solutions to dissolve the copper and form a pregnant leaching solution (or PLS).

Solvent extraction is a process designed to purify, concentrate and separate base metals from aqueous solutions derived from leaching, in which these solutions are brought into contact with an organic reagent (extractant) to selectively extract the metal ions of interest.

Solvent extraction comprises the following stages: extraction or loading, where the extractant is mixed with the solutions to form an emulsion aimed to capture metal ions; sorting or settling, where the emulsion breaks down and the extractant containing the metals is separated from the solutions; and re-extraction or stripping, where the metals are discharged into a secondary solution free from impurities to be used in other processes. At this stage, the aqueous PLS solution is treated with a solution of organic solvent and extractant which recovers the copper to be transferred to an electrolytic solution. Specifically, during the extraction or loading stage, the copper is transferred from the PLS to the organic solvent; during the sorting or settling stage, the loaded organic solvent is separated from the solution with lower copper content, known as the raffinate solution; and in the re-extraction or stripping stage, the copper is transferred from the organic solvent to an acidic aqueous solution to be used in electrowinning. The unloaded organic solvent is normally conveyed back to the extraction stage.

Finally, electrowinning consists of recovering copper concentrated in a solution for the purpose of producing high-purity copper cathodes. At this stage, an electrolytic solution containing copper in the form of copper sulfate is fed into electro-winning cells containing anodes (positive pole) and cathodes (negative pole), both of which are immersed in the electrolytic solution. A direct current is applied to the electro-winning cells, circulating between the anodes and cathodes, so that the copper contained in the electrolytic solution is captured by the negative charge of the cathodes, thus eventually being deposited on their surface as metallic copper. In other words, at this stage, the electrolytic solution undergoes electrolysis, during which metallic copper is precipitated onto the cathodes and oxygen is released into the atmosphere via the anodes.

Although the processes previously described occurs in series, the solutions obtained or used at each stage can be recirculated to an earlier stage within the same plant, in order to improve or increase production efficiency and reduce the use of fresh water. A copper cathode production plant typically includes leaching cells, storage tanks, solvent extraction station, mixing tanks or chambers, and an electro-winning plant for the production of copper cathodes.

Furthermore, various processes are generally carried out at a copper foil production plant. Typically, the copper foil production process includes a leaching stage involving a solid high-copper concentration product in an acidic solution, generating a copper-rich solution; a purification and pre-treatment stage, where the copper-rich solution is filtered and additives are added, aimed to obtain a purified, copper-rich electrolytic solution or electrolyte; and a stage involving the electrodeposition of copper from the electrolyte in an electrodeposition cell comprising at least one rotating drum, where copper is continuously deposited onto the rotating drum to produce rolls of copper foil. Typically, the electrolyte used in the electrodeposition stage is recycled and recirculated back to the leaching stage. The copper foil obtained that do not meet the required specifications and/or properties are considered scrap and are redirected to a leaching stage. The copper foil production plant generally comprises storage tanks, mixing tanks or chambers, and a rotary drum for depositing copper and producing copper foil.

The high-concentration solid copper product fed into a copper foil plant is a copper product derived from copper cathodes obtained through an electrowinning process. Typically, the high-concentration solid copper product used is referred to as "copper wire rod", which is produced in a high-temperature casting stage from copper cathodes. The solid high-copper concentration product must be dissolved in a solution comprising sulfuric acid and water, thus producing copper sulfate, to be used in the copper foil process. Additionally, during copper foil production, waste solutions or industrial liquid waste are generated that may contain contaminating impurities, which can be harmful and/or hazardous to the environment; therefore, these must undergo additional treatment stages aimed to comply with established discharge regulations.

Thus, the dissolution of copper rod for copper foil production necessarily involves solution treatment operations and facilities for controlling impurities and managing generated waste, thus requiring equipment and operations that entail additional costs.

In the prior art, various documents can be found describing copper cathode production plants or copper foil plants.

In this regard, one may cite Chilean Patent Application CL199400516, which describes a process for manufacturing copper foil from copper-bearing material, comprising leaching processes, solvent extraction processes, stripping, filtration, and copper foil electrodeposition. This process allows for a direct production of copper foil from copper-bearing ore without the need for an intermediate product or additional steps, such as the production of a high-content copper material and its corresponding leaching process aimed to be used as feed material for copper foil production process. However, this document neither teaches nor suggests a hybrid process and plant for a simultaneous production of copper cathodes and copper foil.

Another document to be cited is U.S. Patent 5,520,792, which discloses a process for producing copper powder from copper-containing material, comprising leaching processes, solvent extraction processes, solid-liquid sorting, stripping, electrowinning, and copper powder sorting from the cathodes using a mechanical scraper. The copper powder can be leached in a leaching solution containing active sulfur, and then, through an electrodeposition step in a rotating drum in contact with said solution, used to produce copper foil. The solution remaining from the copper foil electrodeposition is recirculated and filtered in order to continue producing copper foil in a closed-loop cycle. Although in the process described in this document, the copper powder is not converted into any intermediate product before being used for the production of copper foil, the stage of electrowinning copper cathodes is defined as a stage being part of the sequence required for the production of copper foil, Therefore it does not show or suggest a hybrid process and plant for the simultaneous production of copper cathodes and copper foil.

Another relevant document is Chilean Patent Application CL202102560, describing a combined hydrometallurgical process aimed to recover copper from smelting dusts derived from a pyrometallurgical process of copper sulfide ore. The process comprises subjecting the smelting dusts to leaching; subjecting the leaching product to solid-liquid sorting aimed to obtain, in the liquid phase, a solution containing soluble copper and arsenic, and, in the solid residue or tailings, insoluble copper containing copper sulfides, where the leaching tailings are treated via a flotation concentration process aimed to obtain a commercial concentrate. The process further comprises treating a solution containing soluble copper and arsenic by precipitating and stabilizing the arsenic as scorodite to obtain a dearsenicated solution containing the soluble copper; and refine said arsenic-free solution via a solvent extraction process to generate an electrolyte that can be used to produce copper foil in a rotary reactor, or copper cathodes in an electrowinning process. This document does not show or suggest a hybrid process and plant for the simultaneous production of copper cathodes and copper foil.

Another document to be cited is Chinese Patent Application CN111748688A, which describes a process for preparing copper foil using a copper sulfate solution in a hydrometallurgical process, comprising the steps of: (i) leaching copper using sulfuric acid; (ii) extracting copper; (iii) thorough oil removal; (iv) removal of impurities by using resin; (v) fractional crystallization; (vi) preparation of an electrolyte; (vii) and production of copper foil, wherein the electrolyte is used to obtain a crude copper foil sheet and a residual acid, where the residual acid is returned to step (i). This document does not show or suggest a hybrid process and plant for the simultaneous production of copper cathodes and copper foil.

In light of the above, none of the prior art documents disclose a hybrid plant for the simultaneous production of copper cathodes and copper foil, nor a hybrid method enabling such parallel production, in which unused process streams or waste streams, which could be harmful to the environment if not treated appropriately, are directly reused, the use of reagents is reduced, and process stages are eliminated, thereby improving operational efficiency and reducing waste generation.

### DESCRIPTION OF THE INVENTION

The invention relates to a hybrid plant for the simultaneous and direct production of copper cathodes and copper foil, comprising a bridging plant that enables interaction between the copper cathode production process and the copper foil manufacturing process, thereby reducing the number of production stages, eliminating the need for intermediate products in copper foil production, such as copper wire rod, optimize the use of reagents and facilitate the management of impurities, residues and/or waste. The invention enables the parallel production of copper cathodes and copper foil by transferring a fraction of washed copper loaded organic from a solvent extraction-electrowinning (SX-EW) plant to produce a copper sulfate solution in a bridging plant, which is treated to generate a concentrated copper solution that feeds a copper foil plant. The invention also relates to a hybrid method for simultaneously producing copper cathodes and copper foil, and a bridging plant that enables interaction between a copper cathode production process and a copper foil production process.

In order to define the hybrid plant and hybrid method for the simultaneous production of copper cathodes and copper foil, it was necessary to take into account the concentrations of copper, acidity and impurities in the copper-rich solution, thus ensuring these were consistent with the characteristics of the electrolyte typically used in an industrial copper foil plant.

The copper foil production process, in accordance with standard operating criteria generally used in the industry, involves an electrodeposition stage based on the electrolysis of an electrolyte with a copper (Cu) concentration of 80-100 g/L, and a concentration of 80-100 g/L of sulfuric acid (H₂SO₄), wherein an electrodeposition cell is used that includes at least one rotating drum configured to receive the electrolyte so that copper is deposited continuously onto the rotating drum to produce rolls of copper foil. The copper foil electrodeposition stage requires the use of current densities 15 to 20 times higher than those typically used in a copper electrowinning process, necessitating high electrolyte flow rates and high copper concentrations to overcome/mitigate current density limitations. This makes it difficult to use electrolytes from a copper electrowinning process directly in the copper foil electrodeposition stage. Indeed, in tha case of maintaining the normal operating flows of a copper foil electrodeposition stage, operating that stage with a typical electrolyte from a copper electrowinning process, with an approximate direct concentration of 45 g/L of copper and 150-200 g/L of sulfuric acid, would require a significant reduction in current density, seriously compromising the productivity of the electrodeposition stage and, consequently, the profitability of the copper foil production process. The high acidity ensures the transport of protons from the anode to the cathode, where stoichiometric sulfuric acid is produced directly equivalent to the deposited copper, according to:

| | |
|---|---|
| *Cu*²*⁺ + SO*₄²*⁻ +* 2*e⁻* = *Cu*⁰ + *SO*₄^{2*-*} | (Cathode) |
| ${H}_{2} O = \frac{1}{2} {O}_{2} \left(g\right) + 2 {H}^{+} + 2 {e}^{-}$ | (Anode) |
| ${Cu}^{2 +} + {{So}_{4}}^{2 -} + {H}_{2} O = {Cu}^{0} + \frac{1}{2} {O}_{2} \left(g\right) + {H}_{2} {SO}_{4}$ | (Global) |

The high acidity of the electrolyte, added to the relatively high concentration of copper, requires operation at temperatures of around 45-60 °C. Furthermore, the sulfuric acid generated during the copper foil electrodeposition stage must be removed in order to prevent it from accumulating in the system.

Any discharge of a portion of the electrolyte from the copper foil production plant to the leaching plant, where sulfuric acid is required, also involves a significant amount of copper recycling, with the consequent risk of copper loss in the tailings leachate, as well as a potential impact on the kinetics of copper dissolution from the ore, due to a possible increase in the concentration of copper in the leaching solutions.

The conventional process for producing copper foil from high-concentration solid copper product or copper wire rod solves this problem, as the amount of sulfuric acid required to dissolve the metallic copper from the copper wire rod is stoichiometrically equivalent to the amount of sulfuric acid generated when the copper is deposited during the electrodeposition stage of copper foil production, as follows: ${Cu}^{0} + \frac{1}{2} {O}_{2} \left(g\right) + {H}_{2} {SO}_{4} = {Cu}^{2 +} + {{SO}_{4}}^{2 -} + {H}_{2} O$

The present invention must therefore find a way to dispose of the excess sulfuric acid generated during the copper foil electrodeposition stage, with a view to returning as much of it as possible to the leaching plant, thereby minimizing copper recycle.

The option of using an electrolyte in a copper electrowinning process requires finding a way to significantly increase the copper concentration directly, to levels above 45 g/L Cu, whilst at the same time reducing the sulfuric acid concentration from 180-200 g/L H₂SO₄ to levels that do not compromise the solubility of the copper. In this regard, it was found that increasing the copper concentration was not feasible using solvent extraction, and that evaporation would require a significant amount of energy. Meanwhile, the sulfuric acid concentration could be reduced by diluting it with water, however, it would be necessary to add even more copper to achieve the required concentration. In any case, it is not possible to replenish the copper deposited as copper foil by using electrolyte from a copper electrowinning process, as this solution would compromise the system's water balance.

Consequently, the inventors determined that transferring a fraction of a washed copper loaded organic from a solvent extraction stage, in a process for obtaining copper cathodes, is more advantageous. In this regard, it was recognized that the copper wire rod, generally used in the production of copper foil, can be replaced by copper sulphate precipitated in a modified re-extraction or stripping stage, allowing the discharged organic solution to be returned directly to the solvent extraction stage for recirculation. The modified stripping stage involves obtaining, from the washed copper loaded organic, an emulsion comprising a copper sulphate pulp containing copper sulphate crystals, and a highly concentrated, acid-saturated copper sulphate solution, mixed with an unloaded organic phase.

The precipitated copper sulphate must then be dissolved directly in order to generate a copper-rich solution, or electrolyte, which will be used to feed a copper foil production process. Typically, in copper electrowinning cells there is a simultaneous a decrease in copper concentration, due to the deposition of copper on the cathode, as well as an increase in sulfuric acid concentration, which occurs stoichiometrically with the deposition of copper. Therefore, the electrolyte is recirculated to replenish the copper and remove the sulfuric acid. The use of the conventional stripping stage enables the conventional electrowinning electrolyte extraction to be closed.

The hybrid process must integrate the processes of copper sulphate generation, removal of excess sulfuric acid and copper sulphate redissolution. In order to achieve this integrative process, the present invention proposes the use of a bridging plant between an SX-EW plant and a copper foil plant. The unit operations of the bridging plant must enable: a) the processing of a flow of washed copper loaded organic coming from the SX-EW plant and b) the creation of conditions regarding copper concentration, acidity and impurities in the copper-rich electrolytic solution, or electrolyte, that are compatible with the requirements of an electrolyte for the production of copper foil.

In the present invention, the SX-EW plant and the copper foil plant interact via the bridging plant based on two pairs of flows that enable the transfer of copper and sulfuric acid:
- A flow of washed copper loaded organic entering the bridging plant coming from the SX-EW plant, and a flow of unloaded organic leaving the bridging plant and being recirculated to the solvent extraction stage of the SX-EW plant. These flows are processed in a modified stripping section of the bridging plant, aimed at producing a cake of copper sulphate crystals (CuSO₄·5H₂O), based on the discharge of copper from the washed copper loaded organic, through contact with an aqueous stripping solution, which consists of a concentrated solution of copper sulphate and sulfuric acid that causes the precipitation of copper sulphate crystals. In order to keep impurities in the aqueous stripping solution, carried over in the aqueous-to-organic (A/O) carryover in the washed copper loaded organic, to a minimum, this solution can be discarded and sent to the electro-winning process of the SX-EW plant,
- A flow of a portion of the recycled electrolyte solution from the copper foil plant, which is recirculated to the bridging plant, and a flow of concentrated copper solution leaving the bridging plant and fed into the copper foil plant.

Accordingly, the hybrid plant comprises an SX-EW plant configured to produce copper cathodes; a copper foil plant configured to produce copper foil; and a bridging plant, which connects the SX-EW plant to the copper foil plant, and is configured to receive a flow of washed copper loaded organic from the SX-EW plant, producing a purified and concentrated copper solution that feeds the copper foil plant. These plants are connected in a semi-closed cycle, where copper cathodes and copper foil are produced, with the residual solutions being utilized for recirculation, thus maximizing their use and increasing the efficiency of the production method.

The SX-EW plant comprises a solvent extraction station, configured to purify, concentrate and separate copper from a copper-rich solution or PLS obtained from a leaching process, in order to produce an electrolytic solution containing copper (feed electrolyte); and an electro-winning station, connected to the solvent extraction station, comprising an electro-winning plant with at least one electro-winning cell, comprising a plurality of anodes and cathodes arranged in an interleaved manner, configured to receive the electrolytic solution circulating in at least one electro-winning cell so that copper is deposited on the cathodes in order to obtain copper cathodes from said electrolytic solution. The solutions in the SX-EW plant are recirculated in order to maintain the transfer of copper to the electro-winning cell, where a residual copper-depleted electrolyte from the electrolytic solution, generated after the copper has been deposited on the cathodes, is recirculated to the solvent extraction station; and a copper-depleted raffinate solution, produced by the de-copperisation of the copper-rich solution, is recirculated to the leaching process.

The bridging plant is configured to receive a stream of washed copper loaded organic flow coming from the solvent extraction station of the SX-EW plant, comprising means for subjecting said flow of washed copper loaded organic to a series of stages so as to obtain precipitated copper sulphate, which is subsequently dissolved directly to produce a copper-rich solution or electrolyte to feed the copper foil plant. The sequence of stages includes: stripping and precipitation of copper sulphate; separation of discharged organic matter and copper sulphate crystals; washing of the copper sulphate crystals; and redissolution of the precipitated copper sulphate in demineralized water and a recycled electrolyte solution from the copper foil plant, to produce a purified and concentrated copper solution that feeds the copper foil plant, where the separated unloaded organic is recirculated to the solvent extraction station of the SX-EW plant, to improve reagent utilization efficiency and maintain copper transfer to the copper foil plant. A minor portion of the copper-rich aqueous solution is discarded as a purge and sent to the electro-winning station. The bridging plant may include a set of filters arranged at the outlet of the bridging plant for removing and capturing solid impurities and residual organic from the concentrated copper solution.

The copper foil plant comprises a purification and pre-treatment station designed to receive a concentrated copper solution, which can be filtered and supplemented with additives to form a treated electrolyte suitable for the electrodeposition of copper foil; and at least one electrodeposition cell comprising a rotating drum, or rotating cylindrical cathode, and an anode, configured to produce the electrodeposition of copper foil, receiving the treated electrolyte continuously so that copper is deposited continuously onto the rotating drum in order to obtain copper foil, which builds up into a roll. A recycled electrolyte solution, remaining from the electrodeposition process, may be recirculated to the SX-EW plant and/or to the bridging plant to maintain the transfer of copper and sulfuric acid. A first portion of the recycled electrolyte solution is recirculated to the bridging plant for the redissolution of precipitated copper sulphate, thereby dissolving the amount of copper required to replace the copper removed from the system as copper foil coils from the copper foil plant, thus generating the concentrated copper solution that feeds that copper foil plant. A second portion of the recycled electrolyte solution is recirculated to the electro-winning station of the SX-EW plant to transfer the excess sulfuric acid generated in the at least one electro-deposition cell, due to the electro-deposition of copper foil, and to provide recycled copper which becomes part of the production of copper cathodes. The copper foil plant may further comprise a quality control station for inspecting the quality of the copper foils produced and identifying any defects, thereby separating the accepted copper foil, which meets the required quality criteria, from the rejected copper foil, or that which is defective or has been trimmed, which does not meet the required quality and/or dimensional specifications. The copper foil plant may further comprise a reject leaching station configured to receive and process the rejected or defective copper foil to produce a reject leaching solution, which can be conveyed to the purification and pre-treatment station where it is combined with the concentrated copper solution.

The invention also relates to a hybrid method for simultaneously producing copper cathodes and copper foil. The hybrid method involves producing copper cathodes in an SX-EW plant; producing a concentrated copper solution in a bridging plant; and producing copper foil in a copper foil plant.

The stage involving copper cathode production at the SX-EW plant comprises: subjecting a copper-rich solution, obtained from a leaching process, to a solvent extraction stage, comprising: an extraction or loading stage, where the copper-rich solution is mixed with an organic phase to extract the copper, obtaining a copper-loaded organic phase; a decanting or separation stage, where the copper-loaded organic phase is decanted and separated from a copper-deppleted raffinate solution, which is recirculated to leaching, obtaining copper loaded organic; a washing stage, wherein the copper loaded organic is washed in order to dilute traces of aqueous leaching solution trapped within the copper loaded organic, thereby obtaining washed copper loaded organic; a stripping stage where the washed copper loaded organic is brought into contact with an acidic aqueous solution, transferring the copper to obtain an electrolytic solution containing copper (feed electrolyte); and subjecting the electrolytic solution to an electrowinning process to obtain copper cathodes. Prior to the washing stage, the copper-loaded organic phase may be stored in a copper-loaded organic tank to facilitate the coordination of the various operations involved in copper cathode production. In the stripping stage, the washed copper-loaded organic can be mixed with a recycled copper depleted electrolyte from the copper cathode electrowinning process carried out in the electrowinning station to form the copper-rich electrolytic solution that is fed to the electrowinning station.

The stage of producing a concentrated copper solution at the bridging plant comprises: a transfer stage, in which a portion of the washed copper loaded organic obtained during the solvent extraction stage is transferred; a re-extraction or stripping stage, wherein the portion of washed copper loaded organic material is brought into contact with an aqueous stripping solution, which consists of a concentrated solution of copper sulphate and sulfuric acid, obtaining a phase of unloaded organic and a pulp of copper sulphate crystals with a copper precipitation mother liquor; a separation stage, involving the separation of solids and liquids by centrifugation, filtration or another separation mechanism, to separate the copper sulphate crystal pulp to form a cake of copper sulphate crystal and obtain the copper precipitation mother liquor, consisting of a saturated aqueous solution of copper sulphate highly concentrated in sulfuric acid, which may be recirculated to the re-extraction or stripping stage; a washing stage where the cake of copper sulphate crystals, obtained in the separation stage by centrifugation, filtration or another separation mechanism, is washed with acidified water, whereby the copper precipitation mother liquor of copper sulphate retained in the cake of copper sulphate crystals is displaced, to obtain washed copper sulphate crystals; a sulphate redissolution stage, wherein the washed copper sulphate crystals are mixed with acidified water and a portion of recycled electrolyte solution from the copper foil electrodeposition process, from the copper foil plant, for the redissolution of copper sulphate, obtaining a concentrated copper solution; and a feeding stage, wherein the concentrated copper solution is fed to the copper foil plant.

In the stripping stage, the stripping solution is a concentrated solution of copper sulphate and sulfuric acid that causes copper sulphate crystals to precipitate. In the stripping stage, the unloaded organic phase and the copper sulphate pulp form an emulsion, which is separated by subjecting the emulsion to a decanting stage, where the unloaded organic phase is recirculated to the solvent extraction stage for use in the extraction or loading stage of the solvent extraction process. Before feeding the concentrated copper solution to the copper foil plant, the concentrated copper solution may be subjected to a filtration stage to capture and remove undissolved copper sulphate residues, any unwanted organic carry-over, and, where applicable, other impurities directly, thereby obtaining a filtered concentrated copper solution. The residual sulfuric acid from the aqueous stripping solution, which was used in the re-extraction or stripping stage, is transferred to the unloaded organic, which is recirculated to the solvent extraction station of the SX-EW plant, so that subsequently this residual sulfuric acid passes directly into the raffinate solution to be ultimately consumed in the leaching process. In this way, the recirculation of the unloaded organic allows the sulfuric acid used in the bridging plant to be fed into the leaching process.

The process of producing copper foil at the copper foil plant comprises: filtering and adding additives to a concentrated copper solution in order to form a treated electrolyte suitable for electrodeposition; and subjecting the treated electrolyte to an electrodeposition process to produce rolls of copper foil. The stage of producing copper foil at the copper foil plant may further comprise heating the treated electrolyte, preferably using heat exchangers. The concentrated copper solution is filtered to reduce suspended solids, and additives are added to the concentrated copper solution to improve the physicochemical conditions at the electrode-solution interface during the electrodeposition process. The filtered copper concentrate solution, with additives added, can be mixed with a leaching solution obtained from scrap or defective copper foil that has been rejected, and with a portion of the recycled electrolyte solution generated during the copper foil electrodeposition process, which can be recirculated to be mixed with the copper concentrate solution. The recycled electrolyte solution from the copper foil electrodeposition process can also be recirculated to other stages of the plant or hybrid process in order to transfer copper and sulfuric acid. Thus, a portion of the recycled electrolyte solution from the electrodeposition process can be recirculated to the copper electro-winning process to produce copper cathodes, whilst another portion of the recycled electrolyte solution can be recirculated to the sulphate redissolution stage to produce the concentrated copper solution. Recirculating a portion of the recycled electrolyte solution back to the electro-winning process to produce copper cathodes allows the excess sulfuric acid generated in the copper foil electrodeposition stage to be transferred to the copper cathode electro-winning process, where, through the discharge of electrolyte, the excess sulfuric acid can ultimately be transferred and consumed in the leaching process, and provide recycled copper that becomes part of the copper cathode production. Recirculating a portion of the recycled electrolyte solution back to the sulphate redissolution stage to produce the concentrated copper solution allows the required amount to be dissolved to replenish the copper that has been removed as copper foil rolls from the copper foil production stage. Once the rolls of copper foil have been produced, they can be subjected to quality tests to identify defects, and are then classified as either 'accepted copper foil'-which meets predetermined quality criteria-or 'rejected or defective copper foil'-which fails to meet the required quality standards and is therefore rejected. In addition, some copper foil may be rejected as a result of trimming to achieve the specific dimensions of the product. The rejected or defective copper foil can be leached using a portion of the electrolyte recycling solution from the copper foil electrodeposition process to obtain a leaching solution for rejects, which can be reused in the copper foil production process.

In this way, the present invention enables the use of previously unused process flows and/or waste flows from copper foil production, which are harmful to the environment if not treated appropriately, thereby eliminating intermediate stages or the need for additional inputs, such as copper wire rod, in the production of copper foil. The present invention replaces copper wire rod, the typical source of copper feedstock for copper foil plants, with a copper-rich solution generated from a flow from the SX-EW plant, derived from copper ores. Furthermore, it enables the optimized use of reagents, reducing the quantity required for the production of copper cathodes and copper foil, thereby improving the efficiency of resources such as energy, water and copper in solution. In this way, the hybrid plant design enables efficient, sustainable and cost-effective operation.

### BRIEF DESCRIPTION OF THE FIGURES

The attached figures are included to provide a better understanding of the invention and form part of this description; they also illustrate preferred embodiments of the invention, wherein it can be seen that:
Figure 1 shows a schematic diagram of a hybrid plant and hybrid method for producing copper cathodes and copper foil, in accordance with one embodiment of the invention.
Figure 2 shows a schematic diagram of an SX-EW plant and a bridging plant, and the stages involved in the production of copper cathodes and a concentrated copper solution, in accordance with one embodiment of the invention.
Figure 3 shows a sheet of copper foil produced in the laboratory, in accordance with an implementation of the hybrid process described in the present invention.
Figure 4 shows the tensile strength of the copper foil sheets obtained in the laboratory.
Figure 5 shows the elongation at break of the copper foil sheets obtained in the laboratory.
Figure 6 shows the surface morphology of the opaque side, opposite to the cathode surface, of a copper sheet, both with and without the addition of additives.

### DETAILED DESCRIPTION OF THE INVENTION

The invention relates to a hybrid plant for the simultaneous production of copper cathodes (1) in a solvent extraction-electro-winning (SX-EW) plant (B) and copper foil (3) in a copper foil plant (D), in parallel; to a hybrid method for simultaneously producing copper cathodes (1) and copper foil (3); and to a bridging plant (C) that enables the connection of the SX-EW plant (B), which implements a process for obtaining copper cathodes, and the copper foil plant (D), which implements a process for obtaining copper foil (3).

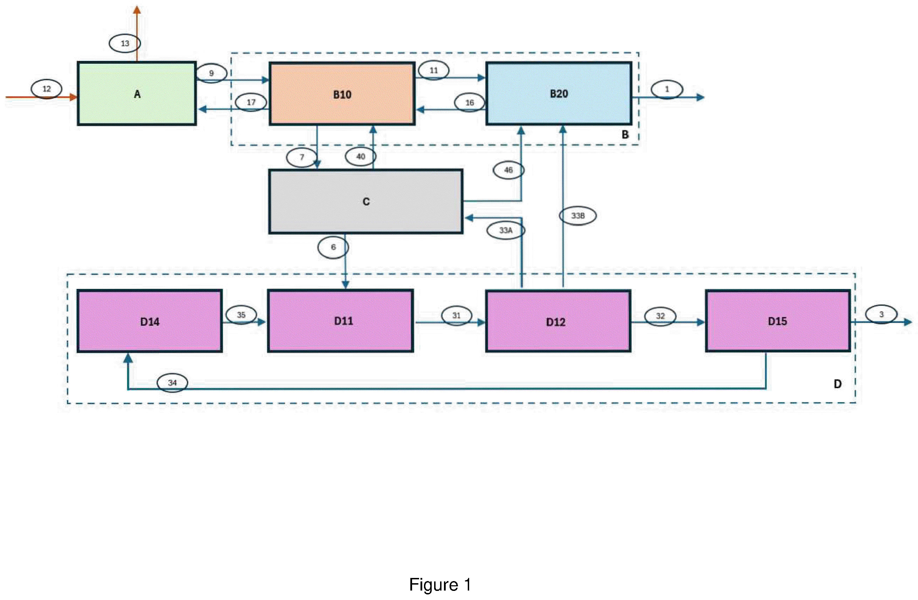

With reference to Figure 1, the hybrid plant comprises an SX-EW plant (B) configured to produce copper cathodes (1), a copper foil plant (D) configured to produce copper foil (3) and a bridging plant (C), which connects the SX-EW plant (B) to the copper foil plant (D), configured to produce a concentrated copper solution (6) to feed said copper foil plant (D), from a flow of washed copper loaded organic (7) containing copper, from the SX-EW plant (B) which feeds said bridging plant (C).

The SX-EW plant (B) comprises a solvent extraction station (B10), configured to purify, concentrate and separate copper from a copper-rich solution (9) or PLS, originating from a leaching plant (A) as effluent from a leaching heap (A1), to produce an electrolytic solution (11) containing copper (feed electrolyte); and an electro-winning station (B20), connected to the solvent extraction station (B10), comprising an electro-winning plant (B21) with at least one electro-winning cell, comprising a plurality of anodes and cathodes arranged in an interleaved manner, configured to receive the electrolytic solution (11) to be mixed with electrolyte that is recirculated in the electro-winning cell, where the resulting electrolyte circulates in the at least one electro-winning cell so that copper is deposited on the cathodes to produce copper cathodes (1). The solutions in the SX-EW plant (B) can be recirculated to maintain copper transfer and improve copper recovery from the process, wherein a copper depleted electrolyte (16), remaining from the electrolytic solution (11), which corresponds to an acidic aqueous solution low in copper generated after the copper is deposited on the cathodes, is recirculated to the solvent extraction station (B10); and a copper-depleted raffinate solution (17), remaining from the copper-rich solution (9) generated after the concentration and separation of the copper, is recirculated to the leaching heap (A1) of the leaching plant (A).

At the leaching plant (A), copper is dissolved from the ore (12) to be processed, which is placed in a leaching heap (A1), by applying an acid solution, thereby producing the copper-rich solution (9) or PLS. During the leaching process, tailings (13) are produced as waste material. The leaching plant (A) may further comprise a raffinate tank (A2) configured to receive raffinate solutions from other processes and transfer a raffinate solution (RF) to the leaching heap (A1); and a PLS tank (A3) from which the copper-rich solution (9) is transferred to the solvent extraction station (B10).

The electro-winning station (B20) could be connected to the solvent extraction station (B10) to recirculate a copper depleted electrolyte (16) which is part of the effluent electrolyte from the copper electro-winning cells as cathodes. The solvent extraction station (B10) is configured to recirculate a copper-depleted raffinate solution (17), resulting from the treatment of the copper-rich solution (9) from the stage where copper is extracted into the organic phase, to the leaching heap (A1) of the leaching plant (A), together with washing effluent solution (29) from the copper loaded organic wash stage.

In one embodiment, the solvent extraction station (B10) comprises solvent extraction reactors (B11) which may consists of different extraction stages configured to receive the copper-rich solution (9) or PLS from the PLS tank (A3) of the leaching plant (A), where the copper-rich solution (9) is mixed with a discharged organic phase (18) to extract the copper, obtaining a copper-loaded organic phase (19) and a copper-depleted raffinate solution (17), which can be transferred to the raffinate tank (A2) of the leaching plant (A); at least one washing tank (B13) for the copper-loaded organic phase, located downstream from the solvent extraction reactor (B11), configured to mix the copper-loaded organic phase (19) with an organic wash solution (28) in order to dilute any leaching solution entrained in the organic phase and obtain a washed copper loaded organic (20); and stripping reactors (B14), downstream of the at least one washing tank (B13), which may consist of different stripping stages, configured to bring the washed copper loaded organic (20) into contact with the lean electrolyte (16) to transfer the copper from the washed copper loaded organic (20) to obtain the electrolytic solution (11) containing copper. The solvent extraction station (B10) may further comprise a raffinate post-decanting tank (B15) connected to at least one washing tank (B13), configured to receive a washing effluent solution (29) from the copper-loaded organic phase (19) and subject it to a decanting stage to retain organic carry-over contained in the washing effluent solution (29) from the organic phase. The raffinate post-decanting tank (B15) may also receive the raffinate solution (17) generated in the solvent extraction reactor (B11) and subsequently transfer a decanted raffinate solution (14) to the raffinate tank (A2) of the leaching plant (A). The solvent extraction station (B10) may further comprise a copper-loaded organic phase post-decanting tank (B12), situated between the solvent extraction reactor (B11) and the at least one washing tank (B13), configured to retain carry-over from the aqueous solution trapped in the copper-loaded organic phase (19).

In one embodiment, the stripping reactors (B14) may be configured to be connected to the electro-winning station (B20) in order to receive the copper depleted electrolyte (16) remaining from the recirculating electrolyte solution of the electro-winning cell, which is generated during the copper electro-winning process, and to mix it with the washed copper loaded organic (20).

In one embodiment, the stripping reactors (B14) may be connected via an unloaded organic solution tank (B16) to an extraction reactor (B11), in order to recirculate any remaining unloaded organic (24) generated.

In one embodiment, the at least one washing tank (B13) of the solvent extraction station (B10) is configured to carry out a loaded organic washing stage in which the copper-loaded organic phase (19), which contains impurities in the form of aqueous carryovers trapped in the organic phase, with an organic wash solution (28) so as to capture the aqueous carryovers in the organic phase, which are diluted such that the impurities are removed, obtaining the washed copper loaded organic (20) and a washing effluent solution (29). The at least one washing tank (B13) may also be configured to communicate with the raffinate post-decanting tank (B15) in order to transfer the washing effluent solution (29) so that it undergoes a decanting stage in said raffinate post-decanting tank (B15) to retain organic carry-overs contained in the organic washing effluent solution (29). The raffinate post-decanting tank (B15) also receives the raffinate solution (17) from the extraction stage (B11) of the SX-EW plant (B). In one embodiment, the organic wash solution (28) is a solution prepared using demineralized water, containing a low concentration of sulfuric acid to promote the solubilization of impurities during washing, thereby preventing any re-extraction of copper from the copper loaded organic (19).

The bridging plant (C) is configured to connect the SX-EW plant (B) with the copper foil plant (D), producing a concentrated copper solution (6), to feed said copper foil plant (D) from a flow of washed copper loaded organic (7), loaded with copper, received from the solvent extraction station (B10) of the SX-EW plant (B), where the flow of washed copper loaded organic (7) corresponds to a portion of the washed copper loaded organic (20) obtained at said solvent extraction station (B10). Specifically, the bridging plant (C) receives the flow of washed copper loaded organic (7) from at least one washing tank (B13) in the solvent extraction station (B10). The bridging plant (C) comprises means for subjecting said flow of washed copper loaded organic (7) to a modified stripping stage that obtains precipitated copper sulphate, which is subsequently dissolved directly to produce the concentrated copper solution (6) to feed the copper foil plant (D). The modified stripping stage involves obtaining, from the washed copper loaded organic flow, an emulsion comprising a copper sulphate pulp containing copper sulphate crystals, and a saturated copper sulphate solution with a high sulfuric acid concentration, in a mixture with unloaded organic. In the bridging plant (C), the flow of washed copper loaded organic (7) undergoes a series of stages, comprising re-extraction or stripping and precipitation of copper sulphate; decanting and separation of discharged organic material (40); separation and washing of copper sulphate crystals (43); and redissolution of precipitated copper sulphate in recycled electrolyte solution from the copper foil plant (D) and acidified water, to produce a purified and concentrated copper solution (6) to feed the copper foil plant (D). The bridging plant (C) may include a set of filters located at the outlet of the bridging plant (C) that remove and capture solid impurities and/or residual organic, obtaining a filtered, concentrated copper solution. The unloaded organic (40) is recirculated to the solvent extraction station (B10) of the SX-EW plant (B) to be reloaded with copper during the extraction stage and to maintain copper transfer.

In one embodiment, the bridging plant (C) includes a stripping station (C11), which receives the flow of washed copper load organic (7) from the solvent extraction station (B10), and is configured to bring said flow of washed copper loaded organic (7) into contact with an acidified demineralized water solution (41), or acidified water, and an stripping aqueous solution (42), which corresponds to a copper sulphate precipitation mother liquor, saturated with copper sulphate and highly concentrated in sulfuric acid, to discharge the copper from the flow of washed copper loaded organic (7) and obtain an emulsion comprising a pulp of copper sulphate crystals (43) consisting of a saturated copper sulphate solution, highly concentrated in sulfuric acid, and copper sulphate crystals, in a mixture with the unloaded organic (40); a decanting station (C12), downstream from the stripping station (C11), configured to separate the unloaded organic (40) from the pulp of copper sulphate crystals (43); a separation station (C13), downstream from the decanting station (C12), configured to, firstly, separate the pulp of copper sulphate crystals (43) to obtain the precipitation mother liquor, consisting of a saturated aqueous solution of copper sulphate, highly concentrated in sulfuric acid, and form a mass or cake of copper sulphate crystals (45); and, secondly, wash the cake of copper sulphate crystals (45) with acidified water (44), whereby the precipitation mother liquor of copper sulphate retained in the cake of copper sulphate crystals (45) is displaced, wherein said precipitation mother liquor is recirculated to the stripping station (C11) to form the stripping aqueous solution (42), thereby obtaining a cake of washed copper sulphate crystals (47); and a sulphate redissolution station (C14), downstream from the separation station (C13), configured to dissolve the copper sulphate, where the cake of washed copper sulphate crystals (47) is mixed with acidified demineralized water (49) and a first portion (33A) of a recycled electrolyte solution (37) from the copper foil plant (D), to obtain a concentrated copper solution (6) which can be fed to the copper foil plant (D).

The unloaded organic material (40), separated at the decanting station (C12), is recirculated to the solvent extraction station (B10) of the SX-EW plant (B). In one embodiment, the decanting station (C12) of the bridging plant (C) may be in communication or in contact with the extraction reactor (B11) of the solvent extraction station (B10) of the SX-EW plant (B), in order to transfer the unloaded organic material (40) directly to the SX extraction stages. The sulfuric acid added to the acidified demineralized water solution (41), which was used in the stripping station (C11), is transferred to the unloaded organic (40) during copper discharge, which is then recirculated to the solvent extraction station (B10) of the SX-EW plant (B), so that, subsequently during the extraction stage, said remaining sulfuric acid passes into the raffinate solution (RF), to be finally consumed in the leaching heap (A1). In this way, the recirculation of the unloaded organic (40) allows the sulfuric acid used in the bridging plant (C) to be transferred to the leaching plant (A). The concentrations of copper and sulfuric acid in the unloaded organic (40) are determined by the equilibrium that arises during the transfer of copper and sulfuric acid resulting from contact between the organic and aqueous phases in the stripping station (C11) or during the stripping stage. Such equilibrium depends on the temperature, the concentration of the extractant in the organic phase, the O/A ratio between the organic and aqueous flows, and the concentration of sulfuric acid in the aqueous phase. By way of example, for an extractant concentration of 30%, an O/A ratio of 2, and a sulfuric acid concentration of 180 g/L, the equilibrium concentration of the unloaded organic (40) would be around 3.4 g/L of copper. The flow of unloaded organic material (40) is similar to the flow of washed copper loaded organic (7), which is determined according to the O/A ratio criterion.

The stripping aqueous solution (42) corresponds to the precipitation mother liquor of copper sulphate, which is recirculated to the stripping station (C11) from the separation station (C13), whilst also serving as the carrier liquid for the copper sulphate crystals in the pulp of copper sulphate crystals (43). Said solution is saturated with copper, implying a concentration of around 45-60 g/L of copper, depending on the temperature and the concentration of sulfuric acid. The concentration of sulfuric acid generally ranges, though not exclusively, between 150 and 200 g/L of sulfuric acid. By way of example, at ambient temperature and a sulfuric acid concentration of around 180 g/L of sulfuric acid, the copper concentration could reach around 50-55 g/L of copper in the stripping aqueous solution (42). The precipitation mother liquor is recirculated to the stripping station (C11) to form the stripping aqueous solution (42) and is mixed with the acidified demineralized water solution (41), consisting of water and sulfuric acid, to replenish the water and sulfuric acid consumed in the stripping process, forming a concentrated solution of copper sulphate and sulfuric acid which is brought into contact with the flow of washed copper loaded organic (7), causing the precipitation of copper sulphate crystals, thereby obtaining an emulsion comprising a pulp of copper sulphate crystals (43) consisting of a solution of copper sulphate and copper sulphate crystals, in a mixture with the unloaded organic material (40).

In one embodiment, the stripping station (C11) comprises at least one stripping reactor. In one embodiment, the stripping station (C11) comprises an array of stripping reactors arranged in series and/or in parallel. The stripping aqueous solution (42) operates on the basis of a constant inventory volume defined by the size of the stripping station (C11) or stripping reactor (mixer-settler). This inventory, corresponding to a saturated copper solution with a high concentration of sulfuric acid, is recirculated at a constant flow rate defined by the O/A ratio, which is equivalent to the ratio: [Organic Flow/Aqueous Flow]. Generally, the O/A ratio in stripping varies between 1.5 and 3.5. In one embodiment, the stripping aqueous solution (42) has a concentration of between 45-60 g/L of copper and a concentration of between 150-200 g/L of sulfuric acid. In one embodiment, the acidified demineralized water solution (41) is added to the stripping station (C11) in an amount that is stoichiometrically defined by the amount of CuSO₄.5H₂O that precipitates. The concentration of sulfuric acid in the stripping station (C11) is set to facilitate the re-extraction of copper from the flow of washed copper loaded organic (7), typically between 150 and 200 g/L of sulfuric acid, depending on the type and characteristics of the extractant used in the solvent extraction station (B10). The concentration of sulfuric acid in the acidified demineralized water solution (41) varies during the process, being adjusted according to the concentration of sulfuric acid in the stripping aqueous solution (42) in order to maintain the re-extraction of copper from the flow of washed copper loaded organic (7), i.e. a concentration of between 150-200 g/L of sulfuric acid.

In one embodiment, the decanting station (C12) comprises at least one decanting tank. In one embodiment, each decanting tank of the decanting station (C12) is connected to a respective stripping reactor of the stripping station (C11). The decanting station (C12) separates the pulp of copper sulphate crystals (43) from the unloaded organic material (40), wherein the pulp of copper sulphate crystals (43) has a weight corresponding to between 50 and 70% of the weight of the unloaded organic material (40).

In one embodiment, the separation station (C13) comprises at least one separation device. In one embodiment, a washing solution (46), which is effluent, may be transferred from the separation station (C13) to an electrolyte recycling tank (B22) of the electrowinning station (B20) of the SX-EW plant (B) as a purge of impurities contained in the saturated copper sulphate solution. In a particular embodiment, the separation device may be a centrifuge, a filter or another separation element.

In one embodiment, the sulphate redissolution station (C14) comprises at least one tank for redissolving sulphate, configured to dissolve the copper sulphate in the cake of washed copper sulphate crystals (47) in a first portion (33A) of the recycled electrolyte solution (37) coming from the copper foil plant (D).

The first portion of recycled electrolyte solution (33A) corresponds to a fraction of a recycled electrolyte solution (37), remaining from the electrodeposition of copper foil, which contains a high concentration of copper, typically between 80-100 g/L of copper, and sulfuric acid, in a concentration similar to that of the copper, typically between 80-100 g/L of sulfuric acid, at a temperature consistent with the solubility of copper, typically between 45-60°C. The operation of the bridging plant (C) enables the replenishment of copper deposited in the copper foil plant (D) by introducing fresh copper via the recycled electrolyte solution (37), thereby maintaining the copper content of the electrolyte fed to the electrolytic cells of the copper foil plant (D) at the steady-state copper concentration. The addition of demineralized water (49) is carried out solely to compensate for any water losses due to evaporation. The demineralized water (49) used in the bridging plant (C) is produced in a reverse osmosis plant where the chloride content of the treated water is directly minimized to levels below 50 ppm, generally 5-10 ppm

In one embodiment, the bridging plant (C) may further comprise a plurality of filters configured to remove and capture solid impurities and/or residual organic matter from the concentrated copper solution (6) to obtain a filtered concentrated copper solution. The concentrated copper solution (6) has a copper concentration of between 80 and 100 g/L depending on temperature and acidity, typically ranging directly between 45 and 60°C and 80 to 100 g/L of sulfuric acid, respectively.

The copper foil plant (D) comprises a purification and pre-treatment station (D11) configured to receive and filter a concentrated copper solution (6), whilst also adding additives (30) to form a treated electrolyte (31) suitable for the electrodeposition of copper foil; and at least one electrodeposition cell (D12), which includes a rotating drum or rotating cylindrical cathode and an anode, and is configured to carry out the electrodeposition of copper foil, receiving the treated electrolyte (31) so that copper is deposited continuously onto the rotating drum to produce a roll of copper foil (32) or copper sheet, and configured to recirculate a recycled electrolyte solution (37) remaining from the electrodeposition of copper foil. The treated electrolyte (31) suitable for the electrodeposition of copper foil has a concentration of 80-100 g/L of copper (Cu), and a concentration of 80-100 g/L of sulfuric acid. The copper foil plant (D) is configured to recirculate a recycled electrolyte solution (37) from the copper foil electrodeposition process to the SX-EW plant (B) and to the bridging plant (C), in order to transfer copper and sulfuric acid. The at least one electrodeposition cell (D12) may be in communication with or connected to the sulphate redissolution station (C14) to transfer a first portion (33A) of the recycled electrolyte solution (37) to dissolve a quantity of copper required to replenish the copper that has left the system as rolls of copper foil (32) from the copper foil plant (D). The at least one electrodeposition cell (D12) may be in communication with or connected to the electro-winning station (B20) of the SX-EW plant (B) to transfer a second portion (33B) of the recycled electrolyte solution (37) from the copper foil electrodeposition process, to provide recycled copper which is fed into the electrolyte solution circuit at the electro-winning station (B20) of the SX-EW plant (B) and to transfer the excess sulfuric acid generated in the at least one electrodeposition cell (D12). The copper foil plant (D) may further comprise a scrap leaching station (D14) configured to receive and process scrap copper foil (34) or trimmings to produce a scrap leaching solution (35), said scrap leaching station (D14) being in communication with or connected to the purification and pre-treatment station (D11) to transfer said scrap leaching solution (35) and mix it with the concentrated copper solution (6). The copper foil plant (D) may further comprise a quality control and finishing station (D15) for the identification of defects and sizing of the deposited roll of copper foil (32). At the quality control and finishing station (D15), the accepted copper foil (3) - which meets the required quality criteria - is separated from the scrap copper foil (34) - which is defective and does not meet the required quality standards. At the quality control and finishing station (D15), scrap copper foil (34) is also generated as a result of trimmings during roll sizing. The copper foil plant (D) may also comprise a temperature adjustment station (D16), consisting of heat exchangers, for heating the treated electrolyte (31) in order to obtain a heated treated electrolyte (36) which is fed to the at least one electrodeposition cell (D12). The temperature of the heated treated electrolyte (36) is between 45 and 60°C, in accordance with the solubility of copper. The copper foil plant (D) may further comprise a recycling electrolyte tank (D13) configured to receive the recycling electrolyte solution (37) generated in the at least one electrodeposition cell (D12), and to manage recirculation flows, wherein a first portion (33A) of the recycled electrolyte solution (37) may be recirculated to the sulphate redissolution station (C14) to dissolve the amount of copper required to replenish the copper that has left the system as copper foil rolls (32) from the copper foil plant (D), and a second portion (33B) of the recycled electrolyte solution (37) can be recirculated to the electro-winning station (B20) of the SX-EW plant (B) to form a purge of a solution rich in copper and sulfuric acid to be mixed with the electrolytic solution (11) prior to undergoing the process of electro-winning copper cathodes (1) and to transfer the excess sulfuric acid generated in the at least one electrodeposition cell (D12). The recycled electrolyte tank (D13) can handle additional recirculation flows, whereby a third portion (33C) of the recycled electrolyte solution (37) can be recirculated to the waste leaching station (D14) to be mixed with the scrap copper foil (34), whilst a fourth portion (33D) of the recycled electrolyte solution (37) can be recirculated to the purification and pre-treatment station (D11) for mixing with the concentrated copper solution (6).

At the purification and pre-treatment station (D11), the concentrated copper solution (6) is filtered to reduce the suspended solids, and additives (30) are added to the concentrated copper solution (6) in order to improve the physicochemical conditions at the electrode-solution interface during the electrodeposition process. In one embodiment, the concentrated copper solution (6) is filtered using means that reduce the suspended solids to a required minimum. In one embodiment, between 5 and 30 ppm of additives (30), which are organic and inorganic chemical compounds, are added to the concentrated copper solution (6) to improve the physicochemical conditions and morphology of the deposit.

In one embodiment, the proportion of the flows of concentrated copper solution (6), scrap leaching solution (35) and the fourth portion (33D) of the recycled electrolyte solution (37) received at the purification and pre-treatment station (D11) is determined by the flow balance at said purification and pre-treatment station (D11), so that the concentration of copper and sulfuric acid in the treated electrolyte (31) is maintained within the specified ranges. In one embodiment, the scrap leaching station (D14) comprises a scrap leaching tank configured to leach scrap copper foil (34) or defective copper foil to produce the scrap leaching solution (35).

In one embodiment, the purification and pre-treatment station (D11) comprises a purification tank configured to add additives (30) and filter the concentrated copper solution (6) to form the treated electrolyte (31) prior to its use in the electrodeposition of copper foil. In one embodiment, the purification and pre-treatment station (D11) further comprises a transfer tank configured to receive the scrap leaching solution (35) and transfer it to the purification tank to be mixed with the concentrated copper solution (6).

In one embodiment, the SX-EW plant (B) may further comprise an unloaded organic storage tank (B16) configured to store the unloaded organic (24, 40) for **sending** the flow of unloaded organic (18) to the extraction reactor (B11) of the solvent extraction station (B10).

In one embodiment, depending on operational requirements, the flow of washed copper unloaded organic (7) may correspond to a fraction or the entirety of the washed copper loaded organic (20) obtained at the solvent extraction station (B10). In case that the flow of washed charged loaded organic (7) corresponds to the entirety of the washed copper loaded organic (20), the electro-winning station (B20) is then fed solely by the waste washing solution (46) from the bridging plant (C) and by the second portion (33B) of the recycled electrolyte solution (37) from the copper foil plant (D) .

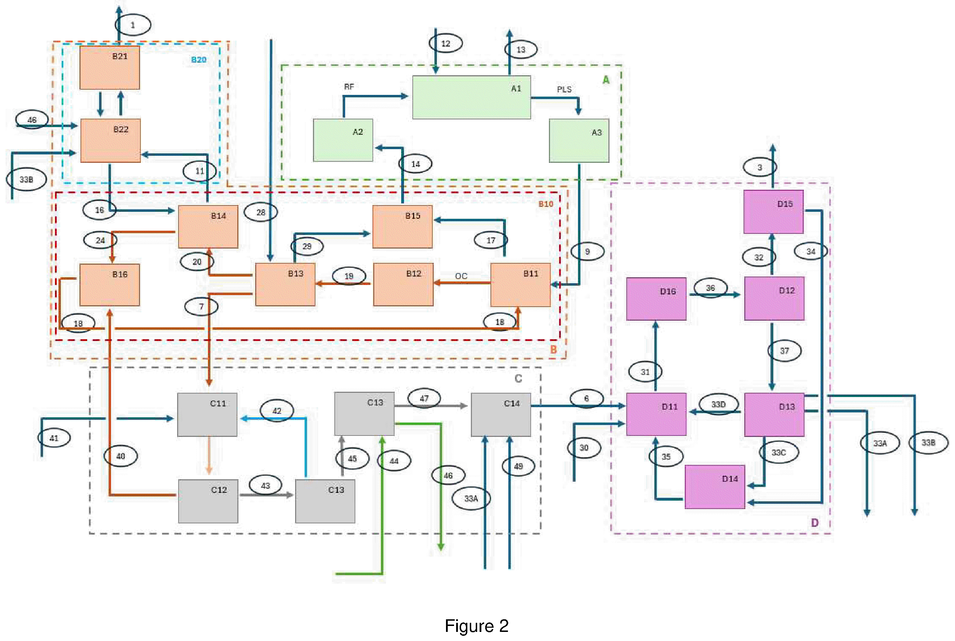

The hybrid method for producing copper cathodes and copper foil in parallel, comprising producing copper cathodes (1) in an SX-EW plant (B); producing a concentrated copper solution (6) in a bridging plant (C); and producing copper foil (3) in a copper foil plant (D), is shown schematically in Figures 1 and 2.

The production of copper cathodes (1) in the SX-EW plant (B) comprises the following stages:
- Subjecting a copper-rich solution (9), obtained from a leaching process, to a solvent extraction stage, comprising:
   ∘an extraction or loading stage, in which the copper-rich solution (9) is mixed with a unloaded organic phase (18) to extract the copper, thus obtaining a copper-loaded organic phase (19);
   o a washing or separation stage, in which the copper-loaded organic phase (19) is washed to remove impurities carried over from the leaching solution, thus obtaining a washed copper loaded organic (20);
   ∘ **a re-extraction** or stripping stage where the washed copper loaded organic (20) is processed by transferring the copper to obtain a copper-enriched electrolytic solution (11) (feed electrolyte), wherein said washed copper loaded organic (20) is brought into contact with or mixed with a copper depleted electrolyte (16), which corresponds to an acidic aqueous solution depleted in copper generated after the copper is deposited on the cathodes in an electrowinning process; and
- Subject the electrolytic solution (11) to an electrowinning process to produce copper cathodes (1).

In the extraction or loading stage, the unloaded organic phase (18) may be a copper-partially-loaded organic phase.

In the extraction or loading stage, a copper-poor raffinate solution (17) is obtained, which may be recirculated to the leaching process as a leaching heap irrigation solution.

In the washing stage, impurities in the aqueous solution carryovers trapped in the copper-loaded organic phase (19) are reduced.

In one embodiment, the washing stage comprises mixing the copper-loaded organic phase (19) with an organic wash solution (28) to obtain a washed copper loaded organic (20). The washing stage may generate a washing effluent solution (29) which may be mixed with the raffinate solution (17) from the solvent extraction stage prior to its recirculation as an irrigation solution in the leaching process. In one embodiment, the organic wash solution (28) is a solution prepared with demineralized water, containing a low concentration of sulfuric acid to promote the solubilization of impurities during washing, thereby simultaneously preventing any re-extraction of copper from the copper loaded organic phase (19).

In the stripping stage, the washed-loaded organic (20) can be mixed with a copper depleted electrolyte (16) recirculated from the copper cathode electrowinning process to form the electrolytic solution (11) (feed electrolyte).

In the stripping stage, an unloaded organic (24) is also obtained, which can be recirculated to the loading stage of the solvent extraction stage in the copper cathode (1) production process at the SX-EW plant (B).

The production of the concentrated copper solution (6) in the bridging plant (C) consists of receiving a portion of flow of washed copper loaded organic (7) from the solvent extraction station (B10) of the SX-EW plant (B), where this portion of flow of washed copper loaded organic (7) is subjected to a modified stripping stage to obtain precipitated copper sulphate, which is subsequently dissolved to generate the concentrated copper solution (6) to feed the copper foil plant (D). The modified stripping stage, as shown in Figure 2, involves subjecting the portion of flow of washed copper loaded organic (7) to stripping and precipitation of copper sulphate; separation of unloaded organic, separation by centrifugation, filtration or another mechanism, and washing of copper sulphate crystals; and redissolution of the precipitated copper sulphate in a solution of recycled electrolyte, recirculated from the copper foil plant (D), and acidified demineralized water (49), to produce a purified and concentrated copper solution (6) to feed the copper foil plant (D). In the process of producing the concentrated copper solution (6), an unloaded organic (40) is also obtained, which is recirculated to the solvent extraction stage in the copper cathode production process at the SX-EW plant (B).

Specifically, as shown in Figure 2, the production of the concentrated copper solution (6) in the bridging plant (C) comprises the following stages:
- a transfer stage, whereby a portion of the flow of washed copper loaded organic (7) obtained in the washing stage of the solvent extraction stage is transferred;
- a re-extraction or stripping stage, in which the portion of flow of washed copper loaded organic (7) is brought into contact with or mixed with an acidified demineralized water solution (41) and a stripping aqueous solution (42), which is a precipitation mother liquor of copper sulphate, saturated with copper sulphate and highly concentrated in sulfuric acid, to discharge the copper from the flow of washed copper loaded organic (7) and obtain an emulsion comprising a pulp of copper sulphate crystals (43) consisting of a saturated copper sulfate solution, highly concentrated in sulfuric acid, and copper sulphate crystals, in a mixture with the discharged organic material (40);
- a decanting stage to separate the unloaded organic material (40) from the pulp of copper sulphate crystals (43);
- a separation stage for separating solids and liquids by means of centrifugation, filtration or another mechanism, to separate the pulp of copper sulphate crystals (43) to obtain a stripping aqueous solution (42), consisting of a highly concentrated aqueous solution of copper sulphate in sulfuric acid, and to form a mass or cake of copper sulphate crystals (45);
- a washing stage, where the cake of copper sulphate crystals (45) is washed with acidified water (44) to dilute and displace the stripping aqueous solution (42) retained in the cake of copper sulphate crystals (45), thus obtaining a cake of washed copper sulphate crystals (47);
- a sulphate redissolution stage, in which the cake of washed copper sulphate crystals (47) is mixed with demineralized water (49) and a first portion (33A) of a recycled electrolyte solution (37) from the copper foil electrodeposition process, to obtain a concentrated copper solution (6); and
- a feeding stage, wherein the concentrated copper solution (6) is fed into the copper foil plant (D).

In one embodiment, in the stripping stage, before bringing into contact or mixing the portion of flow of washed copper loaded organic (7) and the stripping aqueous solution (42), said stripping aqueous solution (42) must be adjusted, first by replenishing the water consumed during the operation as a result of the incorporation of water into the precipitated copper sulphate crystals. This replenishment is defined stoichiometrically at a ratio of 0.36 kg of water per kg of precipitated copper sulphate. The stripping aqueous solution (42) must also be adjusted in terms of its sulfuric acid concentration, to replenish the sulfuric acid consumed during the stripping process and to maintain a sulfuric acid concentration of between 150-200 g/L. The replenishment of water and sulfuric acid is carried out via the flow of acidified demineralized water solution (41). The flow rates of the flow of washed copper loaded organic (7) and the stripping aqueous solution (42) are defined by the stripping O/A ratio; for example, though not exclusively, an O/A ratio of 2.

In the re-extraction or stripping stage, the unloaded organic material (40) is obtained, which is recirculated to the extraction stage or fed into the solvent extraction stage in the copper cathode (1) production process at the EW-SX plant (B). The sulfuric acid from the stripping aqueous solution (42), which was used in the stripping stage, is transferred to the unloaded organic (40), which is recirculated to the extraction stage or feed stage of the solvent extraction process in the production of copper cathodes (1) at the EW-SX plant (B), so that subsequently this remaining sulfuric acid passes into a raffinate solution (RF) to be finally consumed in the leaching process. In this way, the recirculation of the unloaded organic (40) allows the transfer of the sulfuric acid used in the production of the concentrated copper solution (6) to be included in the leaching process.

In the separation stage, the precipitation mother liquor is obtained and recirculated to the re-extraction or stripping stage to form the stripping aqueous solution (42), to be mixed with the acid demineralized water solution (41), forming a concentrated solution of copper sulphate and sulfuric acid which is brought into contact with the flow of washed copper loaded organic (7), causing the precipitation of copper sulphate crystals.

In the separation stage by means centrifugation, filtration or another mechanism, a washing solution (46) may be carried out to be transferred to the electro-winning process of the SX-EW plant (B) to prevent the accumulation of impurities in the stripping aqueous solution (42).

In one embodiment, during the washing stage of the cake of copper sulphate crystals (45), it is envisaged to add an amount of acidified water (44) in the order of 1 to 2 volumes of leachate, which may vary depending on the equipment used, and may range from 0.05 to 0.20 m³ of acidified water (44) per ton of cake of copper sulphate crystals (45). The acidity of the acidified water (44) must be high, between 130 and 170 g/L of sulfuric acid, bearing in mind that the washing solution (46) is recirculated to the electrowinning process of the SX-EW plant (B), whilst minimizing the redissolution of the precipitated sulphate during washing.

The production of copper foil (3) at the copper foil plant (D) comprises the following stages:
- Filtering and adding additives (30) to a concentrated copper solution (6) during a purification and pre-treatment stage, to form a treated electrolyte (31) suitable for electrodeposition; and
- Subjecting the treated electrolyte (31) to a copper foil electrodeposition process to obtain copper foil coils (32).

After the rolls of copper foil (32) have been obtained, said rolls of copper foil (32) may be subjected to quality tests to identify defects, being classified as accepted copper foil (3), corresponding to the finished end product, which meets predetermined quality criteria, and rejected or scrap copper foil (34), which does not meet a predetermined quality standard or consists of trimmings, and is therefore rejected. The defective or scrap copper foil (34) can be leached to obtain a scrap leaching solution (35) which can be reused in the production process of copper foil sheets (3), being mixed with the concentrated copper solution (6).

Before filtering and adding additives (30) to the concentrated copper solution (6) entering the copper foil plant (D), it may be mixed with a scrap leaching solution (35) obtained from scrap copper foil (34) or from defective foil that has been rejected.

Before subjecting the treated electrolyte (31) to an electrodeposition process, the treated electrolyte (31) may be subjected to a heat exchange stage to obtain a heated treated electrolyte (36) which is subjected to the electrodeposition process in order to obtain rolls of copper foil (3).

In the copper foil electrodeposition process, a recycled electrolyte solution (37) is obtained which can be recirculated to various stages, where a first portion (33A) of the recycled electrolyte solution (37) can be recirculated to the sulphate redissolution stage to dissolve the amount of copper required to replenish the copper that has left the system as rolls of copper foil rolls (32) from the copper foil electrodeposition process, and a second portion (33B) of the recycled electrolyte solution (37) is recirculated to the electrowinning process to produce copper cathodes (1), constituting a purge of copper-rich solution to be mixed with the electrolytic solution (11) before being subjected to the copper cathode electrowinning process (1) and transfer the excess sulfuric acid generated in the copper foil electrodeposition process to the electrowinning process for copper cathodes (1). The recycled electrolyte solution (37) may also be recirculated to other stages, where a third portion (33C) of the recycled electrolyte solution (37) is recirculated to the waste leaching stage to be mixed with the scrap copper foil (34) and a fourth portion (33D) of the recycled electrolyte solution (37) is recirculated to the purification and pre-treatment stage to be mixed with the concentrated copper solution (6).

The flow of the first portion (33A) of the recycled electrolyte solution (37) is determined by the ratio of the amount of copper foil deposited to the difference between the copper concentration of the concentrated copper solution (6) coming from the bridging plant (C) and the copper concentration of the recycled electrolyte solution (37). The flow of the first portion (33A) of the recycled electrolyte solution (37) must be controlled in order to adjust the production of copper foil and the copper concentrations of the flows involved in copper redissolution, such that the concentrated copper solution (6) has a copper concentration of between 80 and 100 g/L. In the sulphate redissolution stage, the main liquid flow is the first portion (33A) of recycled electrolyte solution (37), whilst the addition of demineralized water (49) serves only to compensate for water losses due to evaporation. The second portion (33B) of the recycled electrolyte solution (37) is a portion of the recycled electrolyte solution (37) that is discharged, wherein said flow is determined by the amount of sulfuric acid generated during the copper foil electrodeposition process that must be removed from the system. This quantity is determined by the mass balance of the copper foil plant (D) based on the stoichiometric ratio of 1.54 kg of sulfuric acid to be removed per kg of electrodeposited copper.

The flow of the third portion (33C) of the recycled electrolyte solution (37) is determined by the ratio of the quantity of scrap copper foil (34) to the difference between the copper concentration of the scrap leaching solution (35), the effluent from the waste leaching station (D14), and the copper concentration of the recycled electrolyte solution (37). The copper concentration of the scrap leaching solution (35) ranges from 80 to 100 g/L of copper, depending on the temperature and acidity of the scrap leaching solution (35), typically between 45-60 °C and 80-100 g/L of sulfuric acid. The ratio between the flow of the third portion (33C) of recycled electrolyte solution (37) and the flow of the scrap leaching solution (35) is given by the mass balance of the scrap copper foil (34) leaching stage. The flow of the fourth portion (33D) of the recycled electrolyte solution (37) corresponds to the fraction of the recycled electrolyte solution (37) remaining after subtracting the flows of the first portion (33A), second portion (33B) and third portion (33C) of the recycled electrolyte solution (37). It is not necessary to control this flow, as it is determined by the remaining recirculation flows.

Various alternatives can be considered for managing the excess sulfuric acid generated during the electrodeposition of copper foil: In a first embodiment, illustrated in Figure 2, the excess of sulfuric acid is recirculated to the SX-EW plant (B) by discharging a second portion (33B) of the recycled electrolyte solution (37) from the copper foil electrodeposition process. A first portion (33A) of the recycled electrolyte solution (37) is recirculated to the bridging plant (C) to dissolve the amount of copper required to replace the copper that has left the system as copper foil rolls (32) from the copper foil plant (D) and as copper contained in the second portion (33B) of the recycled electrolyte solution (37) sent to the SX-EW plant (B). In this way, a concentrated copper solution (6) is obtained, maintaining only the water balance of the hybrid plant, as the excess sulfuric acid was removed via the second portion (33B) of the recycled electrolyte solution (37). By way of an example of the first embodiment, with a production of 10,000 tpa of copper foil, the recycled electrolyte solution (37) has concentrations ranging from 80 to 100 g/L of copper and sulfuric acid, where the second portion (33B) of the recycled electrolyte solution (37) may correspond to approximately 20 m³/h, representing between 1,600 and 2,000 kg/h of copper for a production of 1,165 kg/h of copper foil. The flow of the second portion (33B) of the recycled electrolyte solution (37) allows recycled copper to be integrated into the electro-winning process at the SX-EW plant (B). The water imbalance caused by the recirculation of the second portion (33B) of the recycled electrolyte solution (37) increases the discharge of copper depleted electrolyte (16) leaving the electro-winning process to be recycled by means of leaching.

In a second embodiment, a supplementary treatment is considered for the copper depleted electrolyte (16) leaving the electrowinning process, involving the recirculation of the second portion (33B) of the recycled electrolyte solution (37) from the copper foil electrodeposition process; which may exceed the usual design criteria for electrowinning processes, where the disposal of copper depleted electrolyte (16) should not exceed 5% of the total copper produced. The supplementary treatment involves the decopperization of the copper depleted electrolyte (16) using supplementary electrowinning cells, which operate in a similar manner to stripping cells in a copper electrowinning plant. The supplementary electrowinning cells operate in series, where the copper depleted electrolyte (16) to be de-copperised flows by overflow, in cascade, from one cell to another, until it has passed through all the cells, thus reducing the copper concentration. In this way, the concentration of the copper depleted electrolyte (16) can vary between 25-40 g/L of copper. In this case, the copper depleted electrolyte (16) is a high-purity solution containing primarily copper and sulfuric acid; consequently, the effluent from the supplementary electro-winning cells will be a highly acidic copper sulphate solution. There is no risk of arsine production or of the precipitation of other contaminants (Ni, Sb, As), which facilitates its recycling to the leaching stage to form part of a solution for agglomeration and curing of crushed ore or an irrigation solution. The incorporation of supplementary electro-winning cells makes it possible to reduce the copper content in the electrolyte waste to levels close to the standard design criteria for electro-winning processes.

In a third embodiment, the excess of sulfuric acid generated during the electrodeposition of copper foil is neutralized, thereby significantly reducing the recirculation of the recycled electrolyte solution (37) to the SX-EW plant (B) via the second portion (33B) of the recycled electrolyte solution (37), thereby reducing the discharge of copper depleted electrolyte (16) to leaching. In this embodiment, the first portion (33A) of the recycled electrolyte solution (37) is recirculated to the bridging plant (C). Based on the flow of the first portion (33A) of the recycled electrolyte solution (37), a first part is diverted to a neutralization section, which operates by adding lime (CaO), forming a gypsum precipitate (CaSO₄.2H₂O) as a by-product of the process, and a second portion is diverted to the redissolution of precipitated copper sulphate, where the cake of washed copper sulphate crystals (47) is dissolved to generate the concentrated copper solution that feeds the copper foil electrodeposition process. The first portion (33A) of the recycled electrolyte solution (37) can be combined with the effluent from the neutralization section to dissolve the precipitated copper sulphate and thus generate the concentrated copper solution. The gypsum precipitate produced in the neutralization section can be disposed of without interfering with any other process.

The description provided above offers a broad definition of the invention, such that its advantages, as well as its variations within the spirit and scope of the invention, will be apparent to a person skilled in the relevant technical field. The scope of the invention is not intended to be limited to the particular forms disclosed herein, and the invention covers all modifications, equivalents and alternatives falling within the spirit and scope of the invention such as defined in the claims.

### EXPERIMENTAL EVIDENCE

### 1. Feasibility of the hybrid process:

As described previously, the hybrid process for the simultaneous production of copper cathodes and copper foil represents an innovative alternative to conventional leaching-SX-EW processes. The process replaces the conventional raw material for the copper foil plant-copper wire rod-with copper loaded organic, an intermediate product of the copper cathode production process in the SX-EW plant.

The bridging plant described enables the generation of a suitable feed electrolyte for the copper foil plant, which operates in accordance with conditions generally used/known in the industry, from the copper loaded organic.

The hybrid process, in accordance with the present invention, allows the integration of the processes for the generation of precipitated copper sulphate, recycling/removal of excess sulfuric acid generated in copper electrodeposition and recirculation of the electrolyte remaining from copper electrodeposition, so that a concentrated copper solution is obtained whose conditions regarding copper concentration, acidity and impurities must be compatible with the requirements of the electrolyte for the copper foil plant.

In this regard, it is necessary to ensure that the concentrated copper solution obtained from the bridging plant, in accordance with the present invention, is of sufficient purity to feed the copper foil plant, so that the resulting sheets or rolls of copper foil meet industry standards. In this context, it is known that in solvent extraction at an SX-EW plant, there are inefficiencies in phase separation, which results in carryover from one phase to another. In the case of aqueous carryover into the charged organic phase (A/O in aqueous), this implies the undesirable transfer of leaching solution laden with impurities to the stripping stage. Although aqueous carryover flows are very low, the concentration of impurities in the leaching solution can be relatively high, particularly if the leaching process is fed with ores requiring moderate to high acid consumption and, additionally, if seawater is used as make-up water. By way of example, in this case one might expect impurity concentrations in the leach solutions of around 7-10 g/L Fe, 10-12 g/L Al, 10-12 g/L Mg, 2-4 g/L Mn, 15-20 g/L Na, and 20-35 g/L Cl.

In light of the above, it is clear that the hybrid process must ensure that the quality of the concentrated copper solution obtained from the bridging plant is sufficient to produce copper foil rolls or sheets of adequate quality.

### 2. Experimental work:

The results of the experimental work carried out to verify the feasibility of producing copper foil of adequate quality from washed copper loaded organic from an SX-EW plant, using the hybrid plant and method described, are presented below. The experimental work replicates the main operations/stages included in the bridging plant, particularly with regard to the production of cake of copper sulphate (CuSO₄·5H₂O) from washed copper loaded organic and the subsequent redissolution of the copper sulphate, in order to characterize the resulting concentrated copper solution and verify its suitability as feed for the copper foil plant.

### Production of copper sulphate (CuSO₄.5H₂O):

An experimental plant was designed for the production of copper sulphate (CuSO₄.5H₂O). This plant simulates a stripping section based on the release of copper from the copper loaded organic through contact with a saturated aqueous copper solution, highly concentrated in sulfuric acid.

Contact between the organic and aqueous phases occurs in a mixer, a stirred reactor where the flow of copper loaded organic and the recirculating flow of saturated aqueous copper solution are fed simultaneously. The precipitation of CuSO₄.5H₂O occurs instantaneously, so that the effluent flow from the mixer is a three-phase emulsion: an unloaded organic phase, the aqueous phase saturated with copper, and the solid phase of CuSO₄.5H₂O precipitate. This flow is fed into a decanter, in this case a glass cylinder with an inverted conical base, where the separation of these phases takes place, thus allowing the copper sulphate to settle at the base of the cone, the aqueous phase to occupy the middle section of the decanter, and the supernatant organic phase to remain at the top. The decanter is fitted with an overflow that allows the continuous discharge of the organic phase as the final product of the operation.

A batch discharge, based on pulses, of a pulp consisting of a copper-saturated aqueous solution and CuSO₄·5H₂O is carried out through the lower outlet of the decanter onto a Büchner filter connected to a vacuum, thus enabling the separation of the precipitated sulphate from the copper-saturated precipitation mother liquor, which is returned to the system for recirculation to the mixer. Along with this solution, the acid transferred to the organic phase-resulting from the simultaneous re-extraction of copper-is replenished. The filtration cake is washed with acidified water to replenish the water leaving the system as crystallization water and as leachate from the filtration cake. The washed-filtered cake is dried for 24 hours at a low temperature (~40°C) to prevent any loss of crystallization water, obtaining an estimated average moisture content of around 10%.

The experimental system was operated for 14 days, during which 11.8 kg of CuSO₄·5H₂O was produced. The main operating conditions and the daily sulphate production results are summarized in Tables 1a and 1b.

**Table 1a: Operating conditions for the production of copper sulphate.**

| Operating parameters | Unit | Value |
|---|---|---|
| Total operating time | d | 14 |
| Feed flow rate | L/h | 15 |
| Water flow rate | L/h | 7.5 |
| Mixer volume | L | 2 |
| Mixer residence time | min | 5 |
| Processed feed volume | L | 910 |
| Copper in the feed | g/L | 5.63 |
| Copper in the resulting effluent | g/L | 2.72 |

**Table 1b: Results of copper sulphate production**

| Copper sulphate production | |
|---|---|
| day | g |
| 1 | 273 |
| 2 | 225 |
| 3 | 437 |
| 4 | 540 |
| 5 | 908 |
| 6 | 1,412 |
| 7 | 357 |
| 8 | 1,076 |
| 9 | 1,336 |
| 10 | 684 |
| 11 | 1,354 |
| 12 | 938 |
| 13 | 1,208 |
| 14 | 1,039 |
| **Total:** | 11,787 |

Over the last six days of operation, samples were taken at the start of each shift to determine the contaminants present in the CuSO₄·5H₂O precipitation mother liquor. Table 2 shows the presence of Fe, Al, Mg and Cl in all samples, indicating that organic matter has been incorporated into the saturated aqueous copper phase (~55 g/L Cu).

**Table 2. Contaminants in the CuSO₄·5H₂O mother liquor.**

| Day | Fe [mg/L] | Cl [mg/L] | Al [mg/L] | Mg [mg/L] |
|---|---|---|---|---|
| 9 | 310 | 210 | 13.10 | 11.91 |
| 10 | 300 | 120 | 13.50 | 11.23 |
| 11 | 320 | 30 | 10.38 | 9.97 |
| 12 | 280 | 30 | 11.76 | 9.51 |
| 13 | 320 | 30 | 11.90 | 9.07 |
| 14 | 410 | N.D. | 15.70 | 18.5 |

Table 3 shows the results from the analysis performed on a composite sample of precipitated copper sulphate, indicating a copper (Cu) content of 22.81%, as well as 0.01% iron (Fe) and aluminum (Al). These very low impurity contents could amount to approximately 0.3% of the weight of the precipitated copper sulphate; this, added to the content of around 89.6% corresponding to pure copper sulphate (CuSO₄.5H₂O), suggests an estimated moisture content of around 10%. It is therefore concluded that the impurities transferred during the stripping stage to the copper sulphate precipitation mother liquor, resulting from carry-over of the copper loaded organic, are not significantly transferred to the precipitated copper sulphate.

**Table 3: Chemical characterization of the precipitated copper sulphate.**

| Item | Cu | Fe | Al | AQ [%] | H2O [%] | Total [%] |
|---|---|---|---|---|---|---|
| AQ [%] | 22.81 | 0.01 | 0.01 | - | - | - |
| PM Metal [g] | 63.55 | 55.85 | 26.98 | - | - | - |
| PM SO₄ [g] | 249.55 | 277.85 | 665.96 | - | - | - |
| % /SO₄ | 0.256 | 0.20 | 0.041 | - | - | - |
| SO₄ [%] | 89.57 | 0.05 | 0.25 | 89.87 | 10.13 | 100.00 |

### Production of electrolyte for a copper foil plant:

Using the precipitated copper sulphate obtained from the laboratory scale SX-stripping process described above, a concentrated solution of copper sulphate and sulfuric acid was prepared, simulating the conditions required for the production of rolls of sheets of copper foil. These conditions correspond to concentrations ranging from 80 to 100 g/L of copper and 80 to 100 g/L of sulfuric acid, at a temperature of approximately 45-60 °C, in order to facilitate the dissolution of the copper sulphate and maintain the system within the salt's solubility window.

The experiment was carried out in a 2 L stirred flask placed on a hotplate to maintain the temperature at the indicated levels. First, 1.8 L of water was added; then acid was added until the desired concentration of sulfuric acid was reached; and, whilst maintaining stirring, copper sulphate was added until it was completely dissolved.

A very rapid dissolution of the copper sulphate was observed, with kinetics dependent on the availability of solid sulphate in suspension, and therefore on the rate of sulphate addition to the reactor. Once the desired concentration was reached, the solution was transferred to an inverted-cone decanter, where undissolved sulphate residues could be separated, as well as organic droplets trapped in the precipitated sulphate which could not be retained during the previous stripping operation.

It should be noted that the organic contamination of the precipitated copper sulphate indicates the inefficiency of the laboratory scale experimental process in ensuring adequate phase separation during the stripping stage. This situation can be significantly improved and mitigated in industrial operations by employing post-decantation stages for the precipitation mother liquor, as well as using continuous three-phase decanter centrifuges that enable the simultaneous separation of three phases: the aqueous phase, represented by the precipitation mother liquor; the organic phase carried over after decantation; and the solid phase of copper sulphate following final washing with acidic water.

The process of dissolving the precipitated copper sulphate during the stripping stage was repeated several times until a volume of 20 L of copper-rich solution had been obtained, as required for the copper foil electrodeposition tests in a specially designed electrochemical cell intended to produce copper foil sheets.

### Production of copper foil:

The experimental program carried out in the electrochemical cell involved six electrodeposition tests, using three types of electrolyte solutions, as indicated below. Each of these three types of solutions was tested with and without the addition of special additives, in accordance with industry-standard additive addition and dosing methodologies:
- Reference Electrolyte Solution P, prepared from copper sulphate pentahydrate P.A. dissolved in sulfuric acid solution.
- Electrolyte solution M, prepared from commercial copper sulphate pentahydrate dissolved in sulfuric acid solution.
- Electrolyte solution G, prepared from copper sulphate pentahydrate precipitated by stripping of the copper loaded organic phase according to the hybrid process described above, dissolved in sulfuric acid solution. The electrolyte solution was briefly brought into contact with oleophilic tape before being fed into the cell.

The procedure carried out in the laboratory involved preparing a total of sixteen slides for each type of solution, working in sequence with the reference solution P, solution M, and finally solution G. Initially, each electrolyte solution was tested without the addition of additives, and a total of eight plates were prepared. Then, between 5 and 30 ppm of additives were added to the electrolyte solution, and a further series of eight slides was prepared. The operating conditions were: current density of 2500 A/m², deposition time of 3 min, with an oscillatory movement of the titanium cathode at 20 cycles/min, under an aeration flow, with the solution at 52.5 °C.

### Quality testing of copper foil

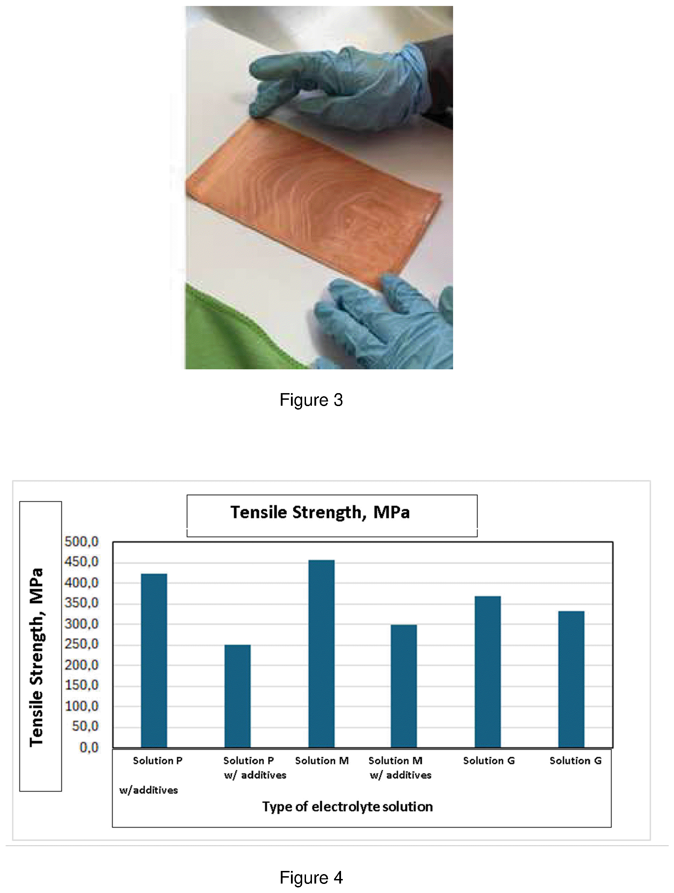

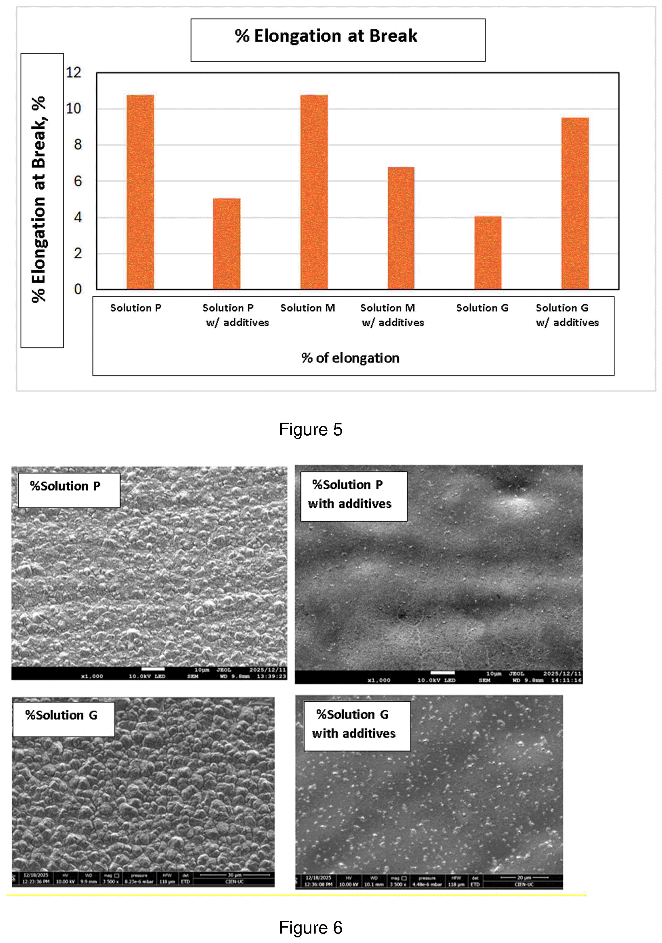

Once the tests were completed, the tensile strength, elongation at break and surface roughness of the various foil samples produced during the experimental campaign were quantitatively determined, and their surface morphology was examined. The tests on the copper foil samples were carried out in parallel in Japan and Chile, and the results were compared. All tests in Japan were carried out by the Akita Industrial Technology Center, whilst the tests in Chile were conducted by BSQC S.A. Ingeniería e Inspección Técnica Company (tensile strength, elongation, roughness) and by the Centro UC Investigación en Nanotecnologia and Materiales Avanzados (CIEN) (SEM electron microscopy). The tests were carried out in accordance with JAC standards. For tensile strength measurements, specimens with a total length of 120 mm and a parallel section length of 50 mm were used, with a width of 10 mm in the measurement zone, operating at a tensile speed of 0.5 mm/sec. Roughness measurements were performed using a white-light scanning interferometer, with a camera resolution of 0.173 µm. The SEM operated at 10 kV, with the specimens at an angle of 20°. The results obtained are summarized in Figure #3 (copper foil sheet, opaque side opposite the cathode surface), Figure 4 (tensile strength) and Figure 5 (% elongation at break), and in Table 4 (roughness, opaque side). Furthermore, Figure 6 shows the surface morphology of the opaque side of the sheet, with and without the addition of additives. The summary of the experimental results is as follows:
- Maximum tensile strength in excess of 300 MPa was measured in all samples prepared from additive-free electrolytes, which is considered satisfactory. In particular, the use of additives significantly reduces the roughness of the opaque side of the foil through recrystallisation of the deposit; however, this also reduces the tensile strength. Similarly, high tensile strength values are maintained for solution M and, in particular, solution G, which are even better than the reference solution P.
- The elongation at break for solutions M and G without additives, at over 4%, is considered satisfactory, and is particularly noteworthy for solution G with additives, where an elongation at break of over 8% was obtained. These samples are not brittle and can be easily stripped from the cathode substrate.
- The roughness of the opaque side of the foils is reduced with the use of additives for all solutions, and is comparable and acceptable for all solutions (Ra between 0.25 and 0.35 µm). The exception is sample M, where the roughness increased slightly with the use of additives; however, this is not consistent with the SEM morphology, which shows a reduction in roughness in these samples. No abnormal nodulation is observed on the surfaces.
- The rougher surface morphology is similar for the reference P solution and the M and G solutions without additives. With the addition of additives, the surfaces become smoother in all cases. The presence of surface irregularities is due to salt residues resulting from manual drying, following immersion in a chromate solution to protect the sheet surface from oxidation.
- Finally, the results presented demonstrate that copper foil sheets produced from an electrolyte prepared from organically charged precipitated copper sulphate (solution G) exhibit tensile strength, % elongation at break, roughness and morphology that are at least comparable to those of sheets produced with the reference electrolyte solution P.

**Table 4: Surface roughness of copper foil sheets.**

| Sample (Opaque side) | Non-contact optical roughness tester |
|---|---|
| | Ra [µm] |
| Solution P | 0.52 |
| Solution P with additives | 0.34 |
| Solution M | 0.31 |
| Solution M with additives | 0.40 |
| Solution G | 0.56 |
| Solution G with additives | 0.25 |

## Claims

1. A hybrid plant for the simultaneous production of copper cathodes (1) and copper foil (3) from copper ores, wherein comprises:
a) a solvent extraction-electro-winning (SX-EW) plant (B) configured to produce copper cathodes (1), comprising:
• a solvent extraction station (B10), configured to purify, concentrate and separate the copper from a copper-rich solution (9) or pregnant leaching solutio (PLS), obtained from a leaching process, aimed to producing an electrolytic solution (11) containing copper (feed electrolyte); and
• an electro-winning station (B20), in connection with the solvent extraction station (B10), comprising an electro-winning cell (B21) with at least one electro-winning cell, comprising a plurality of anodes and cathodes arranged in an interleaved manner, configured to receive the electrolytic solution (11) to be mixed with electrolyte recirculated in the electro-winning cell, wherein the resulting electrolyte circulates in the at least one electro-winning cell such that copper is deposited on the cathodes to obtain copper cathodes (1);
b) a copper foil plant (D) configured to produce copper foil (3), comprising:
• a purification and pre-treatment station (D11) configured to receive and filter a concentrated copper solution (6), adding additives (30) to form a treated electrolyte (31) suitable for the electrodeposition of copper foil; and
• at least one electrodeposition cell (D12) comprising a rotating drum or rotating cylindrical cathode and an anode, being configured to carry out the electrodeposition of copper foil, receiving the treated electrolyte (31) so that copper is deposited continuously to obtain a roll of copper foil (32) and configured to recirculate a recycled electrolyte solution (37), remaining from the electrodeposition of copper foil, and
c) a bridging plant (C), connecting the SX-EW plant (B) with the copper foil plant (D), configured to produce a concentrated copper solution (6) to feed said copper foil plant (D), from a flow of washed copper loaded organic (7), loaded with copper, received from the SX-EW plant (B), wherein the flow of washed copper loaded organic (7) corresponds to a portion of a washed copper loaded organic (20) obtained from the solvent extraction station (B10), wherein said bridging plant (C) comprises:
• a stripping station (C11), which receives the flow of washed copper loaded organic (7) from the solvent extraction station (B10) of the SX-EW plant (B), being configured to bring the flow of washed copper loaded organic (7) into contact with an acidified demineralized water solution (41) and a stripping aqueous solution (42), which corresponds to a copper sulphate precipitation mother liquor, saturated with copper sulphate and highly concentrated in sulfuric acid, to discharge the copper from the flow of washed copper loaded organic (7) and obtain an emulsion comprising a pulp of copper sulphate crystals (43), consisting of a copper sulphate solution, highly concentrated in sulfuric acid and copper sulphate crystals, in a mixture with unloaded organic (40);
• a settling station (C12), downstream from the stripping station (C11), configured to separate the unloaded organic (40) from the pulp of copper sulphate crystals (43);
• a separation station (C13), downstream from the decanting station (C12), configured to separate the pulp of copper sulphate crystals (43) in order to obtain the precipitation mother liquor, consisting of a saturated aqueous solution of copper sulphate, highly concentrated in sulfuric acid, and to form a cake of copper sulphate crystals (45); and configured to wash the cake of copper sulphate crystals (45) with acidified water (44) to obtain a cake of washed copper sulphate crystals (47), wherein the precipitation mother liquor is recirculated to the stripping station (C11) to form the stripping aqueous solution (42);
• a sulphate redissolution station (C14), downstream from the separation station (C13), configured to dissolve the copper sulphate, wherein the cake of washed copper sulphate crystals (47) is mixed with demineralized water (49) and a first portion (33A) of the recirculated electrolyte solution (37) from the copper foil electrodeposition process, for the redissolution of the copper sulphate, to obtain a concentrated copper solution (6) which feeds the copper foil plant (D),
wherein the at least one electrodeposition cell (D12) is in communication or connected to the sulphate redissolution station (C14), to recirculate the first portion (33A) of the recycled electrolyte solution (37) from the copper foil electrodeposition process, to dissolve a quantity of copper necessary to replenish the copper that has left the hybrid plant as rolls of copper foil (32) from the copper foil plant (D);
wherein the at least one electrodeposition cell (D12) is connected with or communicated to the electro-winning station (B20) of the SX-EW plant (B) to recirculate a second portion (33B) of the recycled electrolyte solution (37) from the copper foil electrodeposition process, to provide recycled copper to be mixed with the electrolytic solution (11) for use in the electro-winning of copper cathodes (1) and to transfer the excess sulfuric acid generated in the at least one electrodeposition cell (D12);
wherein the decanting station (C12) is in communication or in contact with the solvent extraction station (B10), to recirculate the separated unloaded organic (40) and transfer the sulfuric acid used in the bridging plant (C) to be incorporated into the leaching process.

2. The hybrid plant according to claim 1, wherein the separation station (C13) is configured to transfer an effluent washing solution (46), as a purge of impurities contained in the saturated copper sulphate solution to the electro-winning station (B20) of the SX-EW plant (B).

3. The hybrid plant according to claim 1, wherein the bridging plant (C) further comprises a plurality of filters configured to remove and capture solid impurities from the concentrated copper solution (6) to obtain a filtered concentrated copper solution.

4. A method for the simultaneous production of copper cathodes (1) and copper foil (3), wherein comprises the steps of:
a) subjecting a copper-rich solution (9), obtained from a leaching process, to a solvent extraction stage, which comprises:
• a loading stage, in which the copper-rich solution (9) is mixed with a unloaded organic phase (18) of copper to extract the copper, thus obtaining a copper-loaded organic phase (19);
• a washing or separation stage, wherein the copper-loaded organic phase (19) is washed to reduce the impurity content from leaching solution carry-over, obtaining a washed copper loaded organic (20); and
• a stripping stage in which the washed copper loaded organic (20) is processed by transferring the copper to obtain a copper-enriched electrolytic solution (11) (feed electrolyte), wherein the washed copper loaded organic (20) is brought into contact with or mixed with a copper depleted electrolyte (16) which corresponds to an acid solution, depleted in copper, generated after the copper is deposited on the cathodes by electro-winning;
b) subjecting the electrolytic solution (11) to an electro-winning process to obtain copper cathodes (1);
c) generating a concentrated copper solution (6), by means of a process comprising the following stages:
• a stripping stage, wherein a portion of the flow of washed copper loaded organic (7), corresponding to a portion of the washed copper loaded organic (20) obtained from the washing or separation stage of the solvent extraction process, wherein the portion of the flow of washed copper loaded organic (7) is mixed with an acidified demineralized water solution (41) and a stripping aqueous solution (42), which corresponds to a copper sulphate precipitation mother liquor, saturated with copper sulphate and highly concentrated in sulfuric acid, to remove the copper from the flow of washed copper loaded organic (7) and obtain an emulsion comprising a mixture of a phase of unloaded organic (40) and a pulp of copper sulphate crystals (43);
• a decanting stage to separate the unloaded organic material (40) from the pulp of copper sulfate crystals (43);
• a separation stage for separating solids and liquids by centrifugation, filtration, or another mechanism, to separate the pulp of copper sulfate crystals (43) and obtain the precipitation mother liquor, consisting of a highly acid-concentrated aqueous solution of copper sulfate, and form a mass or cake of copper sulfate crystals (45);
• a washing stage, wherein the cake of copper sulfate crystals (45) is washed with acidified water (44) to dilute and displace the precipitation mother liquor retained in the cake of copper sulfate crystals (45), to obtain a cake of washed copper sulfate crystals (47), wherein the precipitation mother liquor is recirculated to the stripping station (C11) to form the stripping aqueous solution (42); and
• a sulfate redissolution stage, wherein the cake of washed copper sulfate crystals (47) is mixed with demineralized water (49) and a first portion (33A) of a recycled electrolyte solution (37) from the copper foil electrodeposition process, to obtain a concentrated copper solution (6);
d) obtaining copper foil rolls (32) through a process comprising the steps of:
• filtering and adding additives (30) to the concentrated copper solution (6) in a purification and pretreatment step to form a treated electrolyte (31) suitable for electrodeposition;
• subjecting the treated electrolyte (31) to a copper foil electrodeposition process to obtain rolls of copper foil (32);
wherein the first portion (33A) of the recycled electrolyte solution (37) is recirculated to the sulfate redissolution stage to replenish the copper that has been output as rolls copper foil (32) from the copper foil electrodeposition process,
wherein a second portion (33B) of the recycled electrolyte solution (37) from the copper foil electrodeposition process is recirculated, to be mixed with the electrolytic solution (11) before being subjected to the copper cathode electro-recovery process (1) and to transfer the excess sulfuric acid generated in the copper foil electrodeposition process to the copper cathode (1) electro-recovery process,
wherein the unloaded organic material (40) is recirculated to the extraction stage or fed into the solvent extraction stage to maintain copper transfer, and the sulfuric acid used in the re-extraction or stripping stage is transferred to be included in the leaching process.

5. The method according to claim 4, wherein the separation stage by centrifugation, filtration, or another mechanism, generates a washing solution (46) to be transferred to the electro-winning process of the SX-EW plant (B) to prevent the accumulation of impurities in the stripping aqueous solution (42).

6. The method according to claim 4, wherein the stripping aqueous solution (42) has a copper concentration of between 45-60 g/L and a sulfuric acid concentration of 150-200 g/L.

7. The method according to claim 4, wherein the ratio between the flow of washed copper loaded organic (7) and the stripping aqueous solution (42) is between 1.5 and 3.5.

8. The method according to claim 4, wherein the acidified demineralized water solution (41) has a concentration of between 150 and 200 g/L of sulfuric acid.

9. The method according to claim 4, wherein the recycled electrolyte solution (37) has a concentration of between 80 and 100 g/L of copper and between 80 and 100 g/L of sulfuric acid.

10. The method according to claim 4, wherein the flow of the first portion (33A) of the recycled electrolyte solution (37) is controlled such that the concentrated copper solution (6) has a copper concentration of between 80 and 100 g/L and a sulfuric acid concentration of between 80 and 100 g/L.

11. The method according to claim 4, wherein the acidified demineralized water (49) has a chloride content of less than 50 ppm.

12. The method according to claim 4, wherein that acidified water (44) is provided in an amount of between 0.05 and 0.20 m³ of acidified water (44) per ton of cake of copper sulfate crystals (45).

13. The method according to claim 4, wherein the acidified water (44) has a sulfuric acid concentration of between 130 and 170 g/L.

14. A bridging plant (C) for the simultaneous production of copper cathodes (1) and copper foil (3), connecting an SX-EW plant (B) for the production of copper cathodes (1) and a copper foil plant (D) for the production of copper foil (3), **CHARACTERIZED by** comprising:
• a stripping station (C11), which receives a flow of washed copper loaded organic (7) from the SX-EW plant (B), corresponding to a portion of a washed copper loaded organic (20) obtained during a washing or separation stage of a solvent extraction stage at the SX-EW plant (B), configured to bring the flow of washed copper loaded organic (7) into contact with an acidified demineralized water solution (41) and a stripping aqueous solution (42), which corresponds to a copper sulfate precipitation mother liquor, saturated with copper sulfate and highly concentrated in sulfuric acid, to remove the copper from the flow of washed copper loaded organic (7) and obtain an emulsion comprising a pulp of copper sulfate crystals (43) consisting of a copper sulfate solution, highly concentrated in sulfuric acid and copper sulfate crystals, in a mixture with unloaded organic (40);
• a decanting station (C12), downstream from the stripping station (C11), configured to separate the unloaded organic material (40) from the pulp of copper sulfate crystals (43);
• a separation station (C13), downstream from the decanting station (C12), configured to separate the pulp of copper sulfate crystals (43) in order to obtain the precipitation mother liquor, consisting of a saturated aqueous solution of copper sulfate, highly concentrated in sulfuric acid, and to form a cake of copper sulfate crystals (45); and configured to wash the cake of copper sulfate crystals (45) with acidified water (44) to obtain a cake of washed copper sulfate crystals (47), wherein the precipitation mother liquor is recirculated to the stripping station (C11) to constitute the stripping aqueous solution (42); and
• a sulfate redissolution station (C14), downstream from the separation station (C13), configured to dissolve the copper sulfate, where the cake of washed copper sulfate crystals (47) is mixed with demineralized water (49) and a first portion (33A) of a recycled electrolyte solution (37) from the copper foil electrodeposition process, to obtain a concentrated copper solution (6) that feeds the copper foil plant (D),
where the decanting station (C12) is in communication or in contact with a solvent extraction station (B10), to recirculate the separated unloaded organic (40), and to transfer the sulfuric acid used in the bridging plant (C) to be included in a leaching process.

15. The bridging plant (C) according to claim 14, wherein the separation station (C13) is configured to transfer a washing solution (46), effluent, as a purge of impurities contained in the saturated copper sulfate solution to the SX-EW plant (B).

16. The bridging plant (C) according to claim 14, wherein further comprises a plurality of filters configured to remove and capture solid impurities from the concentrated copper solution (6) to obtain a filtered concentrated copper solution.

17. A process for producing a concentrated copper solution (6) to feed a copper foil plant (D) for the production of copper foil (3), from a washed copper loaded organic (20) obtained from an SX-EW plant (B) for the production of copper cathodes (1), which enables the simultaneous production of copper cathodes (1) and copper foil (3), wherein comprises:
• a stripping stage, in which a portion of the flow of washed copper loaded organic load (7), corresponding to a portion of the washed copper loaded washed organic (20) obtained during the washing or separation stage of a solvent extraction process, is mixed with an acidified demineralized water solution (41) and a stripping solution (42), which corresponds to a copper sulphate precipitation mother liquor, saturated with copper sulphate and highly concentrated in sulfuric acid, to discharge the copper from the flow of washed copper loaded organic (7) and obtain an emulsion comprising a mixture of unloaded organic material (40) and a pulp of copper sulphate crystals (43);
• a decanting stage to separate the unloaded organic (40) from the pulp of copper sulphate crystals (43),
• a separation stage for separating solids and liquids by using centrifugation, filtration or another mechanism, to separate the pulp of copper sulphate crystals (43) to obtain the stripping aqueous solution (42) of copper sulphate and form a mass or cake of copper sulphate crystals (45),
• a washing stage, wherein the cake of copper sulphate crystals (45) is washed with acidified water (44) to dilute and displace the precipitation mother liquor retained in the cake of copper sulphate crystals (45) to obtain a cake of washed copper sulphate crystals (47), wherein the precipitation mother liquor is recirculated to the stripping stage to form the stripping aqueous solution (42); and
• a sulphate redissolution stage, wherein the cake of washed copper sulphate crystals (47) is mixed with demineralized water (49) and a first portion (33A) of a recycled electrolyte solution (37) from the copper foil electrodeposition process, for the redissolution of copper sulphate, in order to obtain a concentrated copper solution (6) feeding the copper foil plant (D),
where the unloaded organic (40) is recirculated to an extraction stage or fed into the solvent extraction stage, in order to maintain the copper transfer and to return the sulfuric acid used in the re-extraction or stripping stage for use in a leaching process.

18. The process according to claim 17, wherein the stripping aqueous solution (42) is recirculated to the stripping stage to be mixed with the acid solution (41) comprising water and sulfuric acid to replenish the consumption of water and sulfuric acid in the stripping process, thus forming a concentrated solution of copper sulphate and sulfuric acid which is mixed with the flow of washed copper loaded organic (7), causing the precipitation of copper sulphate crystals.

19. The process according to claim 17, wherein the separation stage by centrifugation, filtration or another mechanism, a washing solution (46) is produced to be transferred to the electrowinning process of the SX-EW plant (B) in order to prevent the accumulation of impurities in the stripping aqueous solution (42).
